# EUROPEAN PATENT SPECIFICATION

(11) **EP 1 282 982 B1**
(45) Date of publication and mention of the grant of the patent: **29.01.2020**
(21) Application number: 01931769.2
(22) Date of filing: 08.05.2001
(51) Int. Cl.: H04N 19/56, H04N 19/20, H04N 19/503, H04N 19/537, H04N 19/19, H04N 19/567, H04N 19/517

(54) **METHOD FOR ENCODING AND DECODING VIDEO INFORMATION, A MOTION COMPENSATED VIDEO ENCODER AND A CORRESPONDING DECODER**
VERFAHREN ZUR CODIERUNG UND DECODIERUNG VON VIDEOINFORMATIONEN, BEWEGUNGSKOMPENSIERTER VIDEOCODIERER UND ENTSPRECHENDER DECODIERER
PROCEDE DE CODAGE ET DE DECODAGE D'INFORMATIONS VIDEO, DISPOSITIF DE CODAGE VIDEO A COMPENSATION DE MOUVEMENT ET DECODEUR CORRESPONDANT

(30) Priority: 08.05.2000 US 566020
(43) Date of publication of application: 12.02.2003
(73) Proprietor: Nokia Technologies Oy, 02610 Espoo (FI)
(72) Inventor: LAINEMA, Jani, Irving, TX 75039 (US)
(74) Representative: Berggren Oy, Helsinki & Oulu
(86) International application number: PCT/FI2001/000438
(87) International publication number: WO 2001/086962

(56) References cited:
- WO-A1-99/60779
- US-A- 5 751 363
- ZHANG KUI ET AL.: 'Image sequence coding using multiple-level segmentation and affine motion estimation' IEEE JOURNAL ON SELECTED AREAS IN COMMUNICATIONS vol. 15, no. 9, December 1997, pages 1704 - 1713, XP002946366
- MULLER J.H. ET AL: "Report of the Adhoc group on core experiments on coding efficieny in MPEG-4 video", VIDEO STANDARDS AND DRAFTS, 26 October 1997 (1997-10-26), pages 1-47, XP030032030,

## Description

### TECHNICAL FIELD

This disclosure relates to video coding.

### BACKGROUND

Digital video capabilities can be incorporated into a wide range of devices, including digital televisions, digital direct broadcast systems, wireless broadcast systems, personal digital assistants (PDAs), laptop or desktop computers, tablet computers, e-book readers, digital cameras, digital recording devices, digital media players, video gaming devices, video game consoles, cellular or satellite radio telephones, so-called "smart phones," video teleconferencing devices, video streaming devices, and the like. Digital video devices implement video coding techniques, such as those described in the standards defined by MPEG-2, MPEG-4, ITU-T H.263, ITU-T H.264/MPEG-4, Part 10, Advanced Video Coding (AVC), the High Efficiency Video Coding (HEVC) standard presently under development, and extensions of such standards. The video devices may transmit, receive, encode, decode, and/or store digital video information more efficiently by implementing such video coding techniques.

Video coding techniques include spatial (intra-picture) prediction and/or temporal (inter-picture) prediction to reduce or remove redundancy inherent in video sequences. For block-based video coding, a video slice (e.g., a video frame or a portion of a video frame) may be partitioned into video blocks, which may also be referred to as treeblocks, coding units (CUs) and/or coding nodes. Video blocks in an intra-coded (I) slice of a picture are encoded using spatial prediction with respect to reference samples in neighboring blocks in the same picture. Video blocks in an inter-coded (P or B) slice of a picture may use spatial prediction with respect to reference samples in neighboring blocks in the same picture or temporal prediction with respect to reference samples in other reference pictures. Pictures may be referred to as frames, and reference pictures may be referred to a reference frames.

Spatial or temporal prediction results in a predictive block for a block to be coded. Residual data represents pixel differences between the original block to be coded and the predictive block. An inter-coded block is encoded according to a motion vector that points to a block of reference samples forming the predictive block, and the residual data indicating the difference between the coded block and the predictive block. An intra-coded block is encoded according to an intra-coding mode and the residual data. For further compression, the residual data may be transformed from the pixel domain to a transform domain, resulting in residual transform coefficients, which then may be quantized. The quantized transform coefficients, initially arranged in a two-dimensional array, may be scanned in order to produce a one-dimensional vector of transform coefficients, and entropy coding may be applied to achieve even more compression.

### SUMMARY

In general, in some aspects, this disclosure describes techniques related to predicting a video unit value using different techniques or modes, and applying a weighting factor to each mode calculation to determine the video unit value. In some embodiments, the weighting factors are predetermine and may be coded in a video bitstream. In some embodiments, the weighting factors are determined based upon the position of the video unit within an associated block. For example, the weighting factors may be selected from a predetermined list or group of weighting factors based upon the position of the video unit within the block. In another embodiment, the weighting factors are calculated by using video block position information. In one embodiment, the closer the video unit (e.g., pixel) is to the top and/or left edge of the block, the greater the weighting unit associated with an intra prediction mode. In another embodiment, the farther the video unit is from the top and left edge of the block, the greater the weighting unit associated with an intra BL prediction mode.

An apparatus for coding video information according to certain aspects includes a memory unit and a processor in communication with the memory unit. The memory unit stores video information associated with a reference layer and a corresponding enhancement layer. The processor determines a value of a video unit positioned at a position within the enhancement layer based at least in part on an intra prediction value weighted by a first weighting factor, wherein the intra prediction value is determined based on at least one additional video unit in the enhancement layer, and a value of a co-located video unit in the reference layer weighted by a second weighting factor, wherein the co-located video unit is located at a position in the reference layer corresponding to the position of the video unit in the enhancement layer. In some embodiments, the at least one of the first and second weighting factors is between 0 and 1.

An apparatus for coding video information according to certain aspects includes a memory unit and a processor in communication with the memory unit. The memory unit stores video information associated with a reference layer and a corresponding enhancement layer (EL). The processor determines a prediction value of a pixel in the EL based at least in part on an average value of a plurality of pixels in the reference layer.

An apparatus for coding video information according to certain aspects includes a memory unit and a processor in communication with the memory unit. The memory unit stores video information associated with an enhancement layer. The processor applies a smoothing filter to a video unit and at least one additional video unit adjacent to the video unit when the video unit is a pixel value.

An apparatus for coding video information according to certain aspects includes a memory unit and a processor in communication with the memory unit. The memory unit stores difference video information associated with a difference video layer of pixel information that is derived from a difference between an enhancement layer and a corresponding reference layer. A first spatial resolution is associated with the enhancement layer, and a second spatial resolution is associated with the reference layer. The processor determines a value of a video unit positioned at a position within the enhancement layer based at least in part on the difference video layer when the first spatial resolution is not equal to the second spatial resolution. The processor further refrains from determining the value of the video unit based at least in part on the difference video layer when the first spatial resolution is equal to the second spatial resolution.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example video encoding and decoding system that may utilize techniques in accordance with aspects described in this disclosure.
FIG. 2 is a block diagram illustrating an example of a video encoder that may implement techniques in accordance with aspects described in this disclosure.
FIG. 3 is a block diagram illustrating an example of a video decoder that may implement techniques in accordance with aspects described in this disclosure.
FIG. 4 is a block diagram illustrating an example of a video coder.
FIG. 5 illustrates various modes for intra prediction.
FIG. 6 is a block diagram illustrating a prediction process.
FIG. 7 is a block diagram illustrating a current prediction unit and its neighboring units.

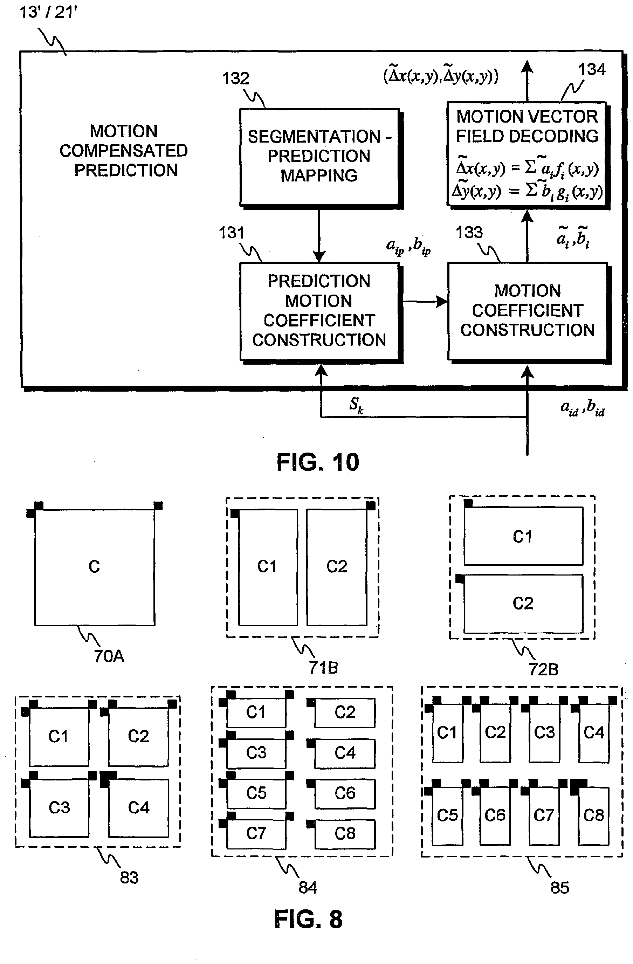

FIG. 8 is a block diagram illustrating enhancement layer difference domain coding and regular pixel domain coding.

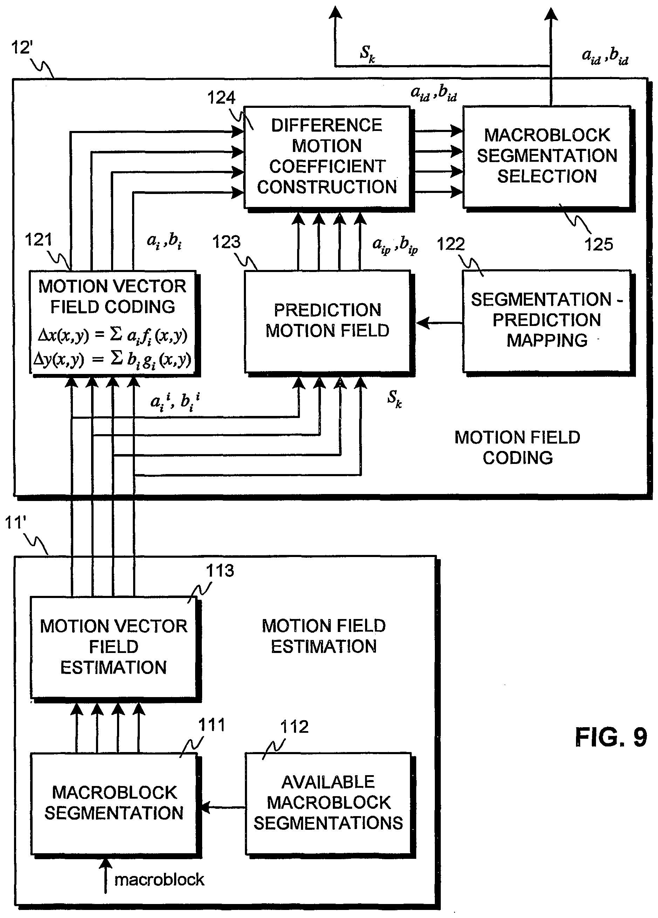

FIG. 9 is a block diagram illustrating use of neighboring values to determine difference domain prediction.
FIG. 10 is a block diagram of a weighted planar intra prediction mode implementation.

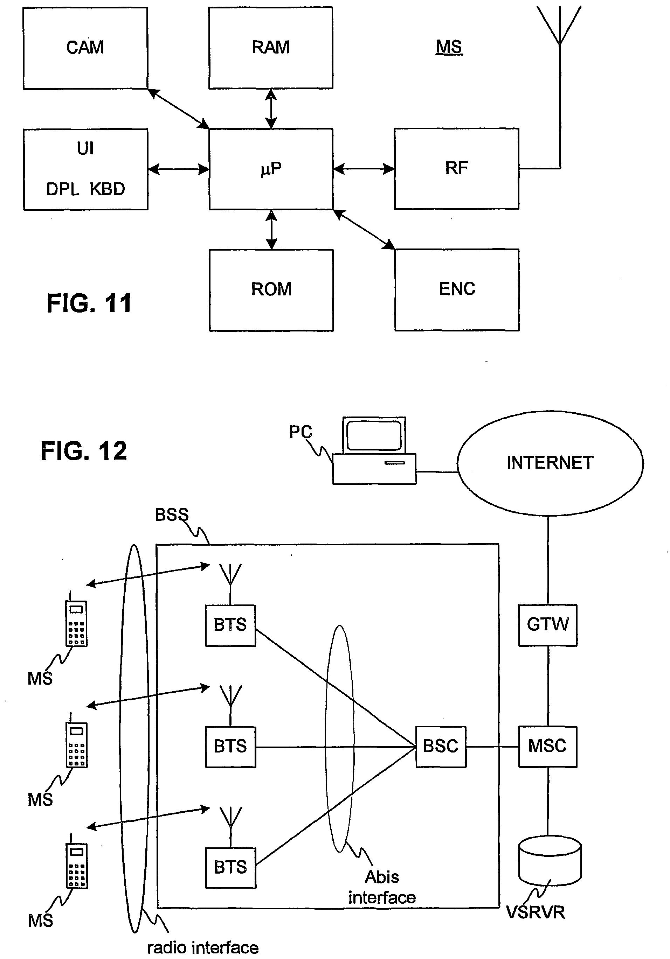

FIG. 11 is a block diagram of another embodiment of a weighted planar intra prediction mode implementation.
FIG. 12 is a block diagram of another embodiment of a weighted planar intra prediction mode implementation.
FIG. 13 is a block diagram of another embodiment of a weighted planar intra prediction mode implementation.
FIG. 14 is a block diagram illustrating an implementation of a DC Prediction mode.
FIG. 15 is a flowchart illustrating an example method for weighted planar intra prediction according to aspects of this disclosure.
FIG. 16 is a flowchart illustrating an example method for weighted planar intra prediction according to aspects of this disclosure.
FIG. 17 is a flowchart illustrating an example method for weighted planar intra prediction according to aspects of this disclosure.
FIG. 18 is a flowchart illustrating an example method for weighted planar intra prediction according to aspects of this disclosure.
FIG. 19 illustrates an example of planar intra prediction mode
FIG. 20 illustrates one embodiment of planar mode intra prediction extension for scalable video coding.
FIG. 21 illustrates one embodiment of enhancement layer intra prediction using a combination of base and enhancement layer prediction samples.
FIG. 22 illustrates one embodiment of a proposed intra residual prediction mode in difference domain intra prediction.
FIG. 23 illustrates an example 1-D directional transform for 45 degree intra prediction direction.
FIG. 24A illustrates one embodiment of filtering for intra DC prediction.
FIG. 24B illustrates one embodiment of filtering for vertical and/or horizontal prediction modes.

### DETAILED DESCRIPTION

The techniques described in this disclosure generally relate to scalable video coding (SVC) and 3D video coding. For example, the techniques may be related to, and used with or within, a High Efficiency Video Coding (HEVC) scalable video coding (SVC) extension. The HEVC SVC extension may also be referred to as Scalable HEVC (SHVC). In an SVC extension, there could be multiple layers of video information. The layer at the very bottom level may serve as a base layer (BL), and the layer at the very top may serve as an enhanced layer (EL). The "enhanced layer" is sometimes referred to as an "enhancement layer," and these terms may be used interchangeably. All layers in the middle may serve as either or both ELs or BLs. For example, a layer in the middle may be an EL for the layers below it, such as the base layer or any intervening enhancement layers, and at the same time serve as a BL for the enhancement layers above it.

For purposes of illustration only, the techniques described in the disclosure are described with examples including only two layers (e.g., lower level layer such as the base layer, and a higher level layer such as the enhanced layer). It should be understood that the examples described in this disclosure can be extended to examples with multiple base layers and enhancement layers as well.

Video coding standards include ITU-T H.261, ISO/IEC MPEG-1 Visual, ITU-T H.262 or ISO/IEC MPEG-2 Visual, ITU-T H.263, ISO/IEC MPEG-4 Visual and ITU-T H.264 (also known as ISO/IEC MPEG-4 AVC), including its Scalable Video Coding (SVC) and Multiview Video Coding (MVC) extensions. In addition, a new video coding standard, namely High Efficiency Video Coding (HEVC), is being developed by the Joint Collaboration Team on Video Coding (JCT-VC) of ITU-T Video Coding Experts Group (VCEG) and ISO/IEC Motion Picture Experts Group (MPEG). A recent draft of HEVC is available from http://wg11.sc29.org/jct/doc end user/current document.php?id=5885/JCTVC-I1003-v2, as of June 7, 2012. Another recent draft of the HEVC standard, referred to as "HEVC Working Draft 7" is downloadable from http://phenix.it-sudparis.eu/ict/doc end user/documents/9 Geneva/wg11/JCTVC-I1003 -v3.zip, as of June 7, 2012. The full citation for the HEVC Working Draft 7 is document JCTVC-11003, Bross et al., "High Efficiency Video Coding (HEVC) Text Specification Draft 7," Joint Collaborative Team on Video Coding (JCT-VC) of ITU-T SG16 WP3 and ISO/IEC JTC1/SC29/WG11, 9th Meeting: Geneva, Switzerland, April 27, 2012 to May 7, 2012. An additional recent draft of the HEVC standard, referred to as "HEVC Working Draft (WD) 8," is available from http://phenix.int-evry.fr/jct/doc end user/documents/10 Stockholm/wg11/JCTVC-J1003-v8.zip. Another recent working version of the HEVC standard is JCTVT-N0041. The approved HECV specification can be found at http://www.itu.int/rec/T-REC-H.265-201304-I. Each of these references is incorporated by reference in its entirety.

Scalable video coding (SVC) may be used to provide quality (also referred to as signal-to-noise (SNR)) scalability, spatial scalability and/or temporal scalability. An enhanced layer may have different spatial resolution than base layer. For example, the spatial aspect ratio between EL and BL can be 1.0, 1.5, 2.0 or other different ratios. In other words, the spatial aspect of the EL may equal 1.0, 1.5, or 2.0 times the spatial aspect of the BL. In some examples, the scaling factor of the EL may be greater than the BL. For example, a size of pictures in the EL may be greater than a size of pictures in the BL. In this way, it may be possible, although not a limitation, that the spatial resolution of the EL is larger than the spatial resolution of the BL.

In coding an enhancement layer, intra prediction may be performed using either pixel domain or difference domain. Intra prediction is based on neighboring pixels and the intra prediction mode. Some examples of intra prediction modes include vertical mode, horizontal mode, DC mode, planar mode, angular mode. Additional intra prediction modes may also be available. For example, in HEVC, 18 intra prediction modes are available for 4x4 blocks and 36 intra prediction modes for 8x8 blocks. In DC mode, the neighboring pixel values are used in intra prediction for the current pixel.

In SVC, the difference domain may refer to a set of difference pixels formed by subtracting the reconstructed base layer pixels from the reconstructed pixels in the enhancement layer, or vice versa. As explained above, difference domain can be used for intra prediction. In difference intra prediction, the current prediction unit (PU) as well as neighboring difference domain pixels are generated by subtracting the enhancement layer reconstructed signal from the corresponding base layer pixels, or vice versa. The farther the relative distance of neighboring samples (used for prediction) with respect to current prediction pixels, the bigger the prediction error. Therefore, for the samples far from the left and top block border, it would be advantageous to use co-located base layer pixels (e.g., located in a corresponding position in the base layer) for prediction instead of enhancement layer neighboring prediction.

The techniques described in this disclosure may address issues relating to intra prediction in SVC. The techniques described in this disclosure may be especially applicable in the difference domain. Intra Prediction and Intra-BL prediction modes may be combined by applying a weight to each Intra Prediction and Intra BL calculation. Each weight may have a fixed value that is applied to an entire prediction block. Each weight may also be adaptive, or determined individually according to some other parameter. An adaptive weight value may be determined based upon the sample location in the prediction block. For example, more weight can be given to an Intra Prediction weight for the samples which are close to the left and/or top boundary, and more weight can be given to an Intra BL weight for the samples that are far from the left and the top boundary.

The techniques described in this disclosure may also address other issues relating to different domain intra prediction in SVC. In DC prediction, the techniques may use the DC values of the co-located pixel's base layer prediction unit pixels in predicting the value of the current pixel. For example, the DC values based on the co-located base layer pixels may be used if the current pixel does not have certain neighbors, or if the current pixel's neighboring pixels are unavailable. The techniques may also choose not to apply a smoothing filter to neighboring pixels for difference domain intra prediction. For example, the smoothing filter may be applied through the Mode Dependent Intra Smoothing (MDIS) provided in HEVC. The techniques may There are systems where the transmission capacity for the compressed video stream is very limited and where the encoding of video information should not be too complicated. For example, wireless mobile terminals have limited space for additional components and as they operate by battery, they typically cannot provide computing capacity comparable to that of desktop computers. In radio access networks of cellular systems, the available transmission capacity for a video stream can be as low as 20 kbps. Consequently, there is need for a video encoding method, which is computationally simple, provides good image quality and achieves good performance in terms of required transmission bandwidth. Furthermore, to keep the encoding method computationally simple, the encoding method should provide satisfactory results using simple motion models.

A prior art document John H. Muller & T.K. Tan: "Report of the Adhoc group on core experiments on coding efficiency in MPEG-4 video", 1 October 1997, pages 1-47, discloses an image encoding method in which block size may vary.

A prior art document Yu Y B et al: "Variable block size and position transform coding", Signal Processing IV: Theories and Applications, vol. 2, no. 1988, 5 September 1988, pages 1011-1013 discloses another image encoding method in which block size may vary.

A prior art document Zhang Kui et al: "Image sequence coding using multiple-level segmentation and affine motion estimation", IEEE Journal on Selected Areas in Communications, vol. 15, no. 9, December 1997, pages 1704-1713, discloses variable block size motion compensation and further makes a distinction between background (global) motion and foreground motion in such a way that variable block sizes are only used in that region of the image classified as belonging to the foreground.

### SUMMARY OF THE INVENTION

An object of the present invention is to provide a method that provides a flexible and versatile motion coefficient prediction for encoding/decoding video information using motion compensation. A further object of the invention is to provide a motion compensated method for encoding/decoding video information that provides good performance in terms of transmission bandwidth and image quality while being computationally fairly simple. A further object is to present a method for encoding/- decoding video information that provides satisfactory results when a comparatively simple motion model, such as the translational motion model, is used.

These and other objects of the invention are achieved by associating the motion coefficient prediction method used for a certain macroblock with the segmentation of the macroblock.

A method for encoding video information according to the invention is characterized by the independent claim directed to an encoding method.

In a method according to the invention, a piece of current video information, typically a current frame, is divided - or, in other words, segmented - into macroblocks. These macroblocks can have any predetermined shape, but typically they are quadrilateral. Furthermore, a certain number of possible segmentations of the macroblocks into blocks is defined, and these are called the available macroblock segmentations. In this description the segmentation of a macroblock into blocks is called macroblock segmentation. The blocks are also typically quadrilateral. The motion of a block within a piece of current video information is typically estimated using a piece of reference video information (typically a reference frame), and the motion of the block is usually modeled using a set of basis functions and motion coefficients. The motion model used in a method according to the invention is advantageously a translational motion model, but there are no restrictions on the use of any other motion model. In a method according to the invention, at least some motion coefficients are represented as sums of prediction motion coefficients and difference motion coefficients and a certain prediction method is used to determine the prediction motion coefficients.

Typically a piece of current video information, for example a current frame, is encoded by segmenting a frame into macroblocks and then processing the macroblocks in a certain scanning order, for example one by one from left-to-right and top-to-bottom throughout the frame. In other words, in this example the encoding process is performed in rows, progressing from top to bottom. The way in which the macroblocks are scanned is not restricted by the invention. A macroblock may be segmented, and the motion field of blocks within a macroblock is estimated. Prediction motion coefficients for a certain block are produced using the motion coefficients of some of the blocks in the already processed neighboring macroblocks or the motion coefficients of some of the already processed blocks within the same macroblock. The segmentation of the already processed macroblocks and the motion coefficients of the blocks relating to these macroblocks are already known.

A distinctive feature in encoding and decoding methods according to the invention is that for each macroblock segmentation there is a finite number of prediction methods. Certain predetermined allowable pairs of macroblock segmentations and prediction methods are thus formed. Here the term prediction method refers to two issues: firstly, it defines which blocks are used in producing the prediction motion coefficients for a certain block within a current macroblock and, secondly, it defines how the motion coefficients related to these prediction blocks are used in producing the prediction motion coefficients for said block. Thus, a macroblock-segmentation - prediction-method pair indicates unambiguously both the segmentation of a macroblock and how the prediction motion coefficients for the blocks within the macroblock are produced. The prediction method may specify, for example, that prediction motion coefficients for a block are derived from an average calculated using motion coefficients of certain specific prediction blocks, or that prediction motion coefficients for a block are derived from the motion coefficient of one particular prediction block. The word average here refers to a characteristic describing a certain set of numbers; it may be, for example, an arithmetic mean, a geometric mean, a weighted mean, a median or a mode. Furthermore, it is possible that the prediction coefficients of a block are obtained by projecting motion coefficients or average motion coefficients from one block to another.

By restricting the number of possible prediction methods per macroblock segmentation, the complexity of the encoding process is reduced compared, for example, to an encoding process where the best prediction motion coefficient candidate is determined freely using any neighboring blocks or combinations thereof. In such a case, there is a large number of prediction motion coefficient candidates. When the prediction blocks are defined beforehand for each prediction method and there is a limited number of prediction methods per macroblock segmentation, it is possible to estimate the cost of each macroblock-segmentation - prediction-method pair. The pair minimizing the cost can then be selected.

Advantageously, there is only one available prediction method per macroblock segmentation. This reduces the complexity of the encoding method even further. Furthermore, in this situation it is possible to conclude the prediction method of a block directly from the selected macroblock segmentation. There is thus necessarily no need to transmit information about the prediction method to the decoding entity. Thus, in this case the amount of transmitted information is not increased by adding adaptive features, i.e. various prediction methods used within a frame, to the encoded information.

By selecting the available prediction blocks and defining the macroblock-segmentation-specific prediction methods suitably, it is possible to implement a high performance video encoding method using at most three predetermined prediction blocks to produce prediction motion coefficients and allowing only one prediction method per macroblock segmentation. For each macroblock, the macroblock-segmentation - prediction-method pair minimizing a cost function is selected. The simple adaptive encoding of motion information provided by the invention is efficient in terms of computation and in terms of the amount of transmitted information and furthermore yields good image quality.

A macroblock, which is processed in a method according to the invention, may be, for example, the luminance component of an YUV macroblock. A method according to the invention may also be applied, for example, to the luminance component and to one or both of the chrominance components of an YUV macroblock. The method may be applied alternatively to other color models or luminance only (monochrome) images. The use of the invention is not restricted to any particular color models.

A method for decoding encoded video information according to the invention is characterized by the independent claim directed to a decoding method.

The invention relates also to an encoder for performing motion compensated encoding of video information, which is characterized by the independent claim directed to an encoder.

A decoder for performing the decoding of encoded video information according to the invention is characterized by the independent claim directed to a decoder.

The invention also relates to a storage device and a network element comprising an encoder according to the invention and to a mobile station comprising an encoder and/or a decoder according to the invention, as well as to computer program elements for encoding and decoding respectively. These are all characterized by their respective independent claims.

The novel features which are considered as characteristic of the invention are set forth in particular in the appended Claims. The invention itself, however, both as to its construction and its method of operation, together with additional objects and advantages thereof, will be best understood from the following description of specific embodiments when read in connection with the accompanying drawings.

### BRIEF DESCRIPTION OF THE DRAWINGS

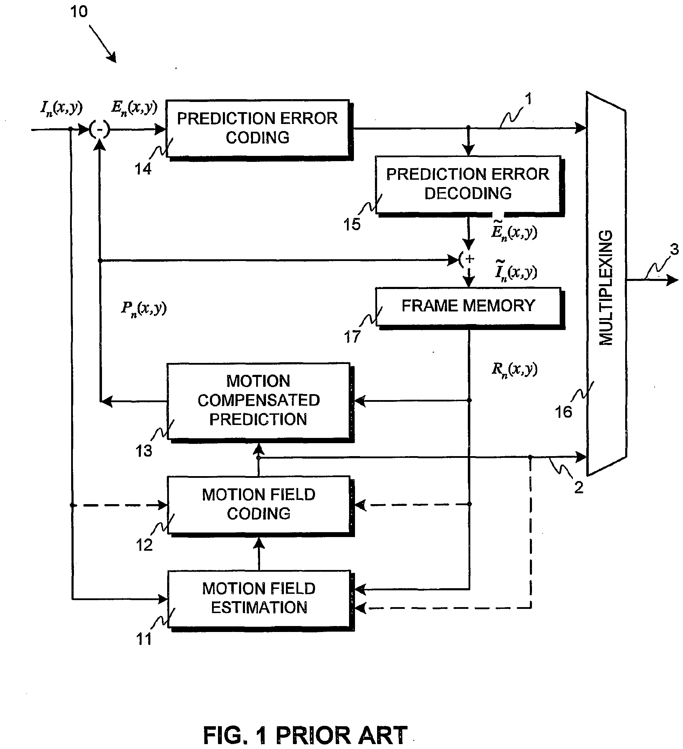

- Figure 1: illustrates an encoder for motion compensated encoding of video according to prior art,

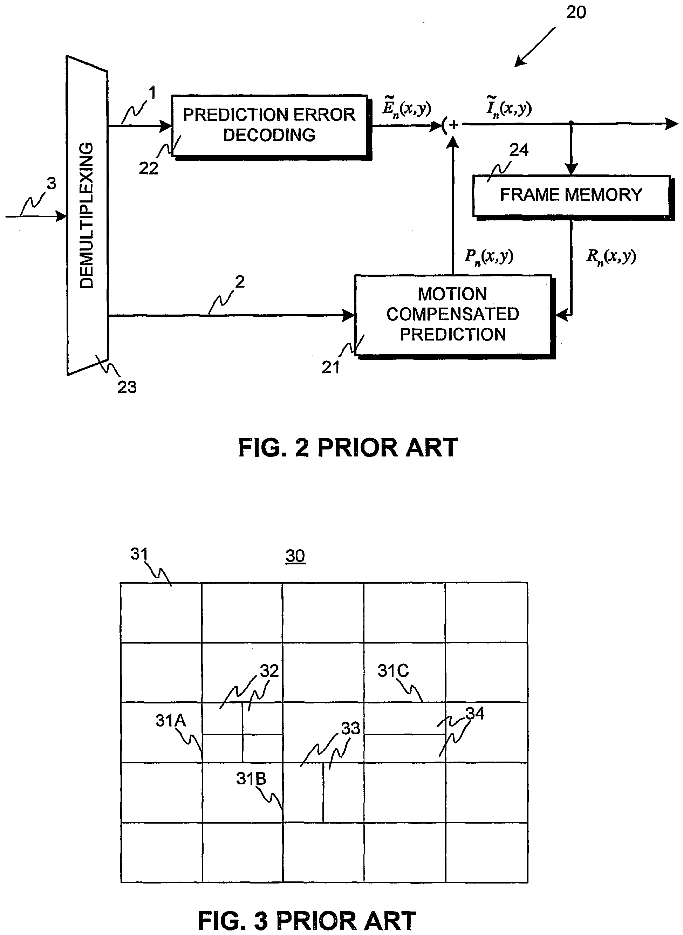

- Figure 2: illustrates a decoder for motion compensated decoding of video according to prior art,
- Figure 3: illustrates a segmentation of a video frame into macroblocks and blocks according to prior art,

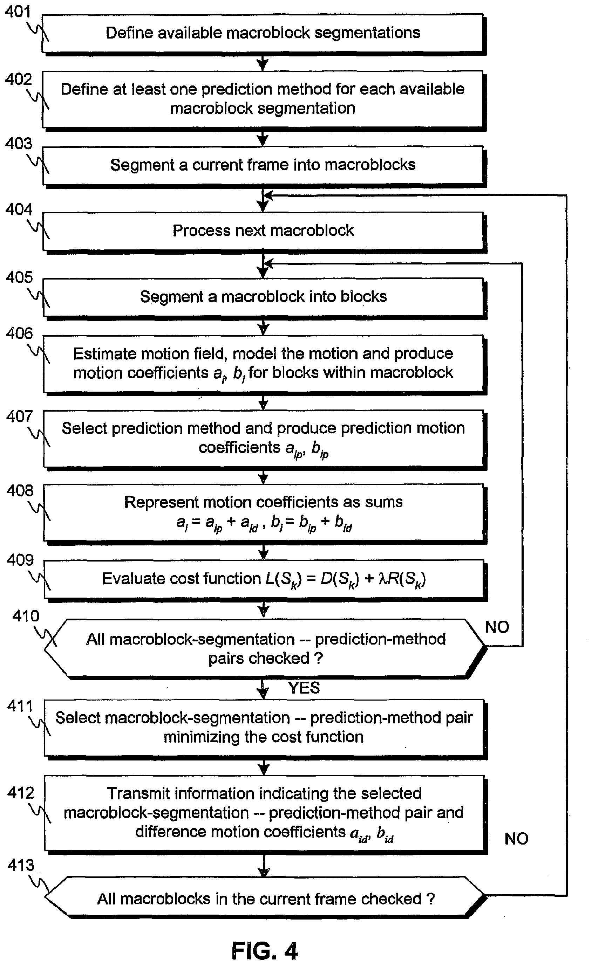

- Figure 4: illustrates a flowchart of a motion compensated video encoding method according to the invention,

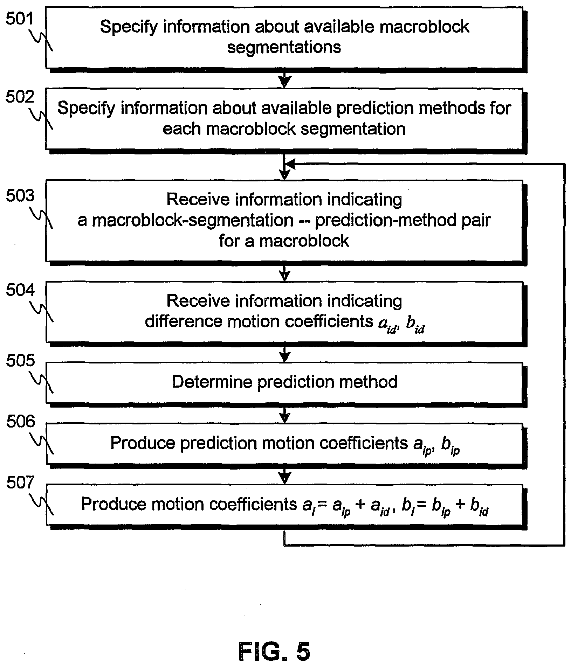

- Figure 5: illustrates a flowchart of a motion compensated video decoding method according to the invention,
to as the HEVC Test Model (HM). The HM presumes several additional capabilities of video coding devices relative to existing devices according to, e.g., ITU-T H.264/AVC. For example, whereas H.264 provides nine intra-prediction encoding modes, the HM may provide as many as thirty-three intra-prediction encoding modes.

In general, the working model of the HM describes that a video frame or picture may be divided into a sequence of treeblocks or largest coding units (LCU) that include both luma and chroma samples. Syntax data within a bitstream may define a size for the LCU, which is a largest coding unit in terms of the number of pixels. A slice includes a number of consecutive treeblocks in coding order. A video frame or picture may be partitioned into one or more slices. Each treeblock may be split into coding units (CUs) according to a quadtree. In general, a quadtree data structure includes one node per CU, with a root node corresponding to the treeblock. If a CU is split into four sub-CUs, the node corresponding to the CU includes four leaf nodes, each of which corresponds to one of the sub-CUs.

Each node of the quadtree data structure may provide syntax data for the corresponding CU. For example, a node in the quadtree may include a split flag, indicating whether the CU corresponding to the node is split into sub-CUs. Syntax elements for a CU may be defined recursively, and may depend on whether the CU is split into sub-CUs. If a CU is not split further, it is referred as a leaf-CU. In this disclosure, four sub-CUs of a leaf-CU will also be referred to as leaf-CUs even if there is no explicit splitting of the original leaf-CU. For example, if a CU at 16x16 size is not split further, the four 8x8 sub-CUs will also be referred to as leaf-CUs although the 16x16 CU was never split.

A CU has a similar purpose as a macroblock of the H.264 standard, except that a CU does not have a size distinction. For example, a treeblock may be split into four child nodes (also referred to as sub-CUs), and each child node may in turn be a parent node and be split into another four child nodes. A final, unsplit child node, referred to as a leaf node of the quadtree, comprises a coding node, also referred to as a leaf-CU. Syntax data associated with a coded bitstream may define a maximum number of times a treeblock may be split, referred to as a maximum CU depth, and may also define a minimum size of the coding nodes. Accordingly, a bitstream may also define a smallest coding unit (SCU). This disclosure uses the term "block" to refer to any of a CU, PU, or TU, in the context of HEVC, or similar data structures in the context of other standards (e.g., macroblocks and sub-blocks thereof in H.264/AVC).

A CU includes a coding node and prediction units (PUs) and transform units (TUs) associated with the coding node. A size of the CU corresponds to a size of the coding node and must be square in shape. The size of the CU may range from 8x8 pixels up to the size of the treeblock with a maximum of 64x64 pixels or greater. Each CU may contain one or more PUs and one or more TUs. Syntax data associated with a CU may describe, for example, partitioning of the CU into one or more PUs. Partitioning modes may differ between whether the CU is skip or direct mode encoded, intra-prediction mode encoded, or inter-prediction mode encoded. PUs may be partitioned to be non-square in shape. Syntax data associated with a CU may also describe, for example, partitioning of the CU into one or more TUs according to a quadtree. A TU can be square or non-square (e.g., rectangular) in shape.

The HEVC standard allows for transformations according to TUs, which may be different for different CUs. The TUs are typically sized based on the size of PUs within a given CU defined for a partitioned LCU, although this may not always be the case. The TUs are typically the same size or smaller than the PUs. In some examples, residual samples corresponding to a CU may be subdivided into smaller units using a quadtree structure known as "residual quad tree" (RQT). The leaf nodes of the RQT may be referred to as transform units (TUs). Pixel difference values associated with the TUs may be transformed to produce transform coefficients, which may be quantized.

A leaf-CU may include one or more prediction units (PUs). In general, a PU represents a spatial area corresponding to all or a portion of the corresponding CU, and may include data for retrieving a reference sample for the PU. Moreover, a PU includes data related to prediction. For example, when the PU is intra-mode encoded, data for the PU may be included in a residual quadtree (RQT), which may include data describing an intra-prediction mode for a TU corresponding to the PU. As another example, when the PU is inter-mode encoded, the PU may include data defining one or more motion vectors for the PU. The data defining the motion vector for a PU may describe, for example, a horizontal component of the motion vector, a vertical component of the motion vector, a resolution for the motion vector (e.g., one-quarter pixel precision or one-eighth pixel precision), a reference picture to which the motion vector points, and/or a reference picture list (e.g., List 0, List 1, or List C) for the motion vector.

A leaf-CU having one or more PUs may also include one or more transform units (TUs). The transform units may be specified using an RQT (also referred to as a TU quadtree structure), as discussed above. For example, a split flag may indicate whether a leaf-CU is split into four transform units. Then, each transform unit may be split further into further sub-TUs. When a TU is not split further, it may be referred to as a leaf-TU. Generally, for intra coding, all the leaf-TUs belonging to a leaf-CU share the same intra prediction mode. That is, the same intra-prediction mode is generally applied to calculate predicted values for all TUs of a leaf-CU. For intra coding, a video encoder may calculate a residual value for each leaf-TU using the intra prediction mode, as a difference between the portion of the CU corresponding to the TU and the original block. A TU is not necessarily limited to the size of a PU. Thus, TUs may be larger or smaller than a PU. For intra coding, a PU may be collocated with a corresponding leaf-TU for the same CU. In some examples, the maximum size of a leaf-TU may correspond to the size of the corresponding leaf-CU.

Moreover, TUs of leaf-CUs may also be associated with respective quadtree data structures, referred to as residual quadtrees (RQTs). That is, a leaf-CU may include a quadtree indicating how the leaf-CU is partitioned into TUs. The root node of a TU quadtree generally corresponds to a leaf-CU, while the root node of a CU quadtree generally corresponds to a treeblock (or LCU). TUs of the RQT that are not split are referred to as leaf-TUs. In general, this disclosure uses the terms CU and TU to refer to leaf-CU and leaf-TU, respectively, unless noted otherwise.

A video sequence typically includes a series of video frames or pictures. A group of pictures (GOP) generally comprises a series of one or more of the video pictures. A GOP may include syntax data in a header of the GOP, a header of one or more of the pictures, or elsewhere, that describes a number of pictures included in the GOP. Each slice of a picture may include slice syntax data that describes an encoding mode for the respective slice. Video encoder 20 typically operates on video blocks within individual video slices in order to encode the video data. A video block may correspond to a coding node within a CU. The video blocks may have fixed or varying sizes, and may differ in size according to a specified coding standard.

As an example, the HM supports prediction in various PU sizes. Assuming that the size of a particular CU is 2Nx2N, the HM supports intra-prediction in PU sizes of 2Nx2N or NxN, and inter-prediction in symmetric PU sizes of 2Nx2N, 2NxN, Nx2N, or NxN. The HM also supports asymmetric partitioning for inter-prediction in PU sizes of 2NxnU, 2NxnD, nLx2N, and nRx2N. In asymmetric partitioning, one direction of a CU is not partitioned, while the other direction is partitioned into 25% and 75%. The portion of the CU corresponding to the 25% partition is indicated by an "n" followed by an indication of "Up," "Down," "Left," or "Right." Thus, for example, "2NxnU" refers to a 2Nx2N CU that is partitioned horizontally with a 2Nx0.5N PU on top and a 2Nx1.5N PU on bottom.

In this disclosure, "NxN" and "N by N" may be used interchangeably to refer to the pixel dimensions of a video block in terms of vertical and horizontal dimensions, e.g., 16x16 pixels or 16 by 16 pixels. In general, a 16x16 block will have 16 pixels in a vertical direction (y = 16) and 16 pixels in a horizontal direction (x = 16). Likewise, an NxN block generally has N pixels in a vertical direction and N pixels in a horizontal direction, where N represents a nonnegative integer value. The pixels in a block may be arranged in rows and columns. Moreover, blocks need not necessarily have the same number of pixels in the horizontal direction as in the vertical direction. For example, blocks may comprise NxM pixels, where M is not necessarily equal to N.

Following intra-predictive or inter-predictive coding using the PUs of a CU, video encoder 20 may calculate residual data for the TUs of the CU. The PUs may comprise syntax data describing a method or mode of generating predictive pixel data in the spatial domain (also referred to as the pixel domain) and the TUs may comprise coefficients in the transform domain following application of a transform, e.g., a discrete cosine transform (DCT), an integer transform, a wavelet transform, or a conceptually similar transform to residual video data. The residual data may correspond to pixel differences between pixels of the unencoded picture and prediction values corresponding to the PUs. Video encoder 20 may form the TUs including the residual data for the CU, and then transform the TUs to produce transform coefficients for the CU.

Following any transforms to produce transform coefficients, video encoder 20 may perform quantization of the transform coefficients. Quantization generally refers to a process in which transform coefficients are quantized to possibly reduce the amount of data used to represent the coefficients, providing further compression. The quantization process may reduce the bit depth associated with some or all of the coefficients. For example, an n-bit value may be rounded down to an m-bit value during quantization, where n is greater than m.

Following quantization, the video encoder may scan the transform coefficients, producing a one-dimensional vector from the two-dimensional matrix including the quantized transform coefficients. The scan may be designed to place higher energy (and therefore lower frequency) coefficients at the front of the array and to place lower energy (and therefore higher frequency) coefficients at the back of the array. In some examples, video encoder 20 may utilize a predefined scan order to scan the quantized transform coefficients to produce a serialized vector that can be entropy encoded. In other examples, video encoder 20 may perform an adaptive scan. After scanning the quantized transform coefficients to form a one-dimensional vector, video encoder 20 may entropy encode the one-dimensional vector, e.g., according to context-adaptive variable length coding (CAVLC), context-adaptive binary arithmetic coding (CABAC), syntax-based context-adaptive binary arithmetic coding (SBAC), Probability Interval Partitioning Entropy (PIPE) coding or another entropy encoding methodology. Video encoder 20 may also entropy encode syntax elements associated with the encoded video data for use by video decoder 30 in decoding the video data.

To perform CABAC, video encoder 20 may assign a context within a context model to a symbol to be transmitted. The context may relate to, for example, whether neighboring values of the symbol are non-zero or not. To perform CAVLC, video encoder 20 may select a variable length code for a symbol to be transmitted. Codewords in VLC may be constructed such that relatively shorter codes correspond to more probable symbols, while longer codes correspond to less probable symbols. In this way, the use of VLC may achieve a bit savings over, for example, using equal-length codewords for each symbol to be transmitted. The probability determination may be based on a context assigned to the symbol.

Video encoder 20 may further send syntax data, such as block-based syntax data, frame-based syntax data, and GOP-based syntax data, to video decoder 30, e.g., in a frame header, a block header, a slice header, or a GOP header. The GOP syntax data may describe a number of frames in the respective GOP, and the frame syntax data may indicate an encoding/prediction mode used to encode the corresponding frame.

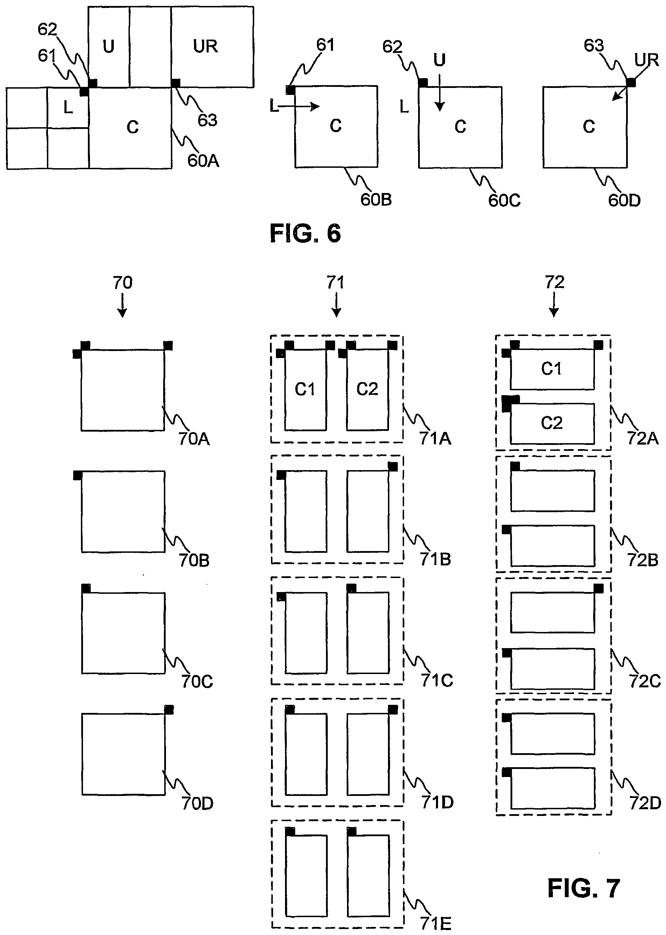

FIG. 2 is a block diagram illustrating an example of a video encoder that may implement techniques in accordance with aspects described in this disclosure. Video encoder 20 may be configured to perform any or all of the techniques of this disclosure. Figure 7 furthermore illustrates some examples of prediction method alternatives related to the macroblock segmentations in a method according to the first preferred embodiment. As in Figure 6, the prediction blocks for blocks within a current macroblock are specified using certain pixel locations which bear a spatial relationship to the blocks within the current macroblock. As an example, the pixel locations in Figure 7 are the same as in Figure 6. When the current macroblock is segmented according to example 70, the prediction coefficients for the single block that comprises the current macroblock can be derived using an average of the motion coefficients of the L, U and UR prediction blocks (macroblock-segmentation - prediction-method pair 70A), or they can be derived from the motion coefficients of prediction block L (pair 70B), prediction block U (pair 70C) or prediction block UR (pair 70D).

Figure 7 also presents some prediction method alternatives for example macroblock segmentations 71 and 72. As can be seen in Figure 7, each block within a macroblock preferably has its own associated prediction blocks. The blocks within the current macroblock, which are already processed, may themselves act as prediction blocks for other blocks within the same macroblock. As an example, consider the macroblock-segmentation - prediction-method pair 71A, where prediction motion coefficients for each block C1 and C2 within the current macroblock are derived from an average of the motion coefficients of the block-specific prediction blocks. In this prediction method block C1 acts as a prediction block for the block C2. The macroblock-segmentation - prediction-method pairs 71B, 71C, 71D and 71E are further examples of possible prediction methods related to the macroblock segmentation 71. Similarly, various prediction method alternatives are presented for macroblock segmentation 72.

In a method according to the first preferred embodiment of the invention, usually the Lagrangian cost function for each of the macroblock-segmentation - prediction-method pairs 70A, 70B, 70C, 70D, 71A, 71B, 71C, 71D, 71E, 72A, 72B, 72C and 72D is evaluated and then the pair minimizing the cost function is chosen as the actual macroblock segmentation used in encoding the macroblock, as described above in connection with an encoding method according to the invention.

Furthermore, it is possible that the segmentation of the neighboring macroblocks affects the number of the macroblock-segmentation - prediction-method pairs available for the current macroblock. In other words, the segmentation of the neighboring macroblocks may lead to a situation in which some of the pairs illustrated in Figure 7 cannot be used for a current macroblock or where some extra video unit when the video unit is a pixel value. The encoder 20 can encode data relating to the video unit and signal the encoded data in a bistream.

In some embodiments, the mode select unit 40, the intra prediction unit 46 (or another component of the mode select unit 40, shown or not shown), or another component of the encoder 20 (shown or not shown) may determine a value of a video unit positioned at a position within the enhancement layer based at least in part on a difference video layer. The difference video layer of pixel information may be derived from a difference between an enhancement layer and a corresponding reference layer. A first spatial resolution can be associated with the enhancement layer, and a second spatial resolution can be associated with the reference layer. When the first spatial resolution is not equal to the second spatial resolution, the encoder 20 may determine the value of the video unit in the EL based at least in part on the difference video layer. When the first spatial resolution is equal to the second spatial resolution, the encoder 20 may refrain from determining the value of the video unit based at least in part on the difference video layer. The encoder 20 can encode data relating to the video unit and signal the encoded data in a bistream. The encoder 20 can also encode and signal a flag indicating whether the difference video layer is used for intra prediction in the bitstream.

Video encoder 20 may perform intra- and inter-coding of video blocks within video slices. Intra-coding relies on spatial prediction to reduce or remove spatial redundancy in video within a given video frame or picture. Inter-coding relies on temporal prediction to reduce or remove temporal redundancy in video within adjacent frames or pictures of a video sequence. Intra-mode (I mode) may refer to any of several spatial based coding modes. Inter-modes, such as uni-directional prediction (P mode) or bi-prediction (B mode), may refer to any of several temporal-based coding modes.

As shown in FIG. 2, video encoder 20 receives a current video block within a video frame to be encoded. In the example of FIG. 1, video encoder 20 includes mode select unit 40, reference frame memory 64, summer 50, transform processing unit 52, quantization unit 54, and entropy encoding unit 56. Mode select unit 40, in turn, includes motion compensation unit 44, motion estimation unit 42, intra-prediction unit 46, and partition unit 48. For video block reconstruction, video encoder 20 also includes inverse quantization unit 58, inverse transform unit 60, and summer 62. A deblocking filter (not shown in FIG. 2) may also be included to filter block boundaries to remove blockiness artifacts from reconstructed video. If desired, the deblocking filter would typically filter the output of summer 62. Additional filters (in loop or post loop) may also be used in addition to the deblocking filter. Such filters are not shown for brevity, but if desired, may filter the output of summer 50 (as an in-loop filter).

During the encoding process, video encoder 20 receives a video frame or slice to be coded. The frame or slice may be divided into multiple video blocks. Motion estimation unit 42 and motion compensation unit 44 perform inter-predictive coding of the received video block relative to one or more blocks in one or more reference frames to provide temporal prediction. Intra-prediction unit 46 may alternatively perform intra-predictive coding of the received video block relative to one or more neighboring blocks in the same frame or slice as the block to be coded to provide spatial prediction. Video encoder 20 may perform multiple coding passes, e.g., to select an appropriate coding mode for each block of video data.

Moreover, partition unit 48 may partition blocks of video data into sub-blocks, based on evaluation of previous partitioning schemes in previous coding passes. For example, partition unit 48 may initially partition a frame or slice into LCUs, and partition each of the LCUs into sub-CUs based on rate-distortion analysis (e.g., rate-distortion optimization). Mode select unit 40 may further produce a quadtree data structure indicative of partitioning of an LCU into sub-CUs. Leaf-node CUs of the quadtree may include one or more PUs and one or more TUs.

Mode select unit 40 may select one of the coding modes, intra or inter, e.g., based on error results, and provides the resulting intra- or inter-coded block to summer 50 to generate residual block data and to summer 62 to reconstruct the encoded block for use as a reference frame. Mode select unit 40 also provides syntax elements, such as motion vectors, intra-mode indicators, partition information, and other such syntax information, to entropy encoding unit 56.

Motion estimation unit 42 and motion compensation unit 44 may be highly integrated, but are illustrated separately for conceptual purposes. Motion estimation, performed by motion estimation unit 42, is the process of generating motion vectors, which estimate motion for video blocks. A motion vector, for example, may indicate the displacement of a PU of a video block within a current video frame or picture relative to a predictive block within a reference frame (or other coded unit) relative to the current block being coded within the current frame (or other coded unit). A predictive block is a block that is found to closely match the block to be coded, in terms of pixel difference, which may be determined by sum of absolute difference (SAD), sum of square difference (SSD), or other difference metrics. In some examples, video encoder 20 may calculate values for sub-integer pixel positions of reference pictures stored in reference frame memory 64. For example, video encoder 20 may interpolate values of one-quarter pixel positions, one-eighth pixel positions, or other fractional pixel positions of the reference picture. Therefore, motion estimation unit 42 may perform a motion search relative to the full pixel positions and fractional pixel positions and output a motion vector with fractional pixel precision.

Motion estimation unit 42 calculates a motion vector for a PU of a video block in an inter-coded slice by comparing the position of the PU to the position of a predictive block of a reference picture. The reference picture may be selected from a first reference picture list (List 0) or a second reference picture list (List 1), each of which identify one or more reference pictures stored in reference frame memory 64. Motion estimation unit 42 sends the calculated motion vector to entropy encoding unit 56 and motion compensation unit 44.

Motion compensation, performed by motion compensation unit 44, may involve fetching or generating the predictive block based on the motion vector determined by motion estimation unit 42. Again, motion estimation unit 42 and motion compensation unit 44 may be functionally integrated, in some examples. Upon receiving the motion vector for the PU of the current video block, motion compensation unit 44 may locate the predictive block to which the motion vector points in one of the reference picture lists. Summer 50 forms a residual video block by subtracting pixel values of the predictive block from the pixel values of the current video block being coded, forming pixel difference values, as discussed below. In general, motion estimation unit 42 performs motion estimation relative to luma components, and motion compensation unit 44 uses motion vectors calculated based on the luma components for both chroma components and luma components. Mode select unit 40 may also generate syntax elements associated with the video blocks and the video slice for use by video decoder 30 in decoding the video blocks of the video slice.

Intra-prediction unit 46 may intra-predict a current block, as an alternative to the inter-prediction performed by motion estimation unit 42 and motion compensation unit 44, as described above. In particular, intra-prediction unit 46 may determine an intra-prediction mode to use to encode a current block. In some examples, intra-prediction unit 46 may encode a current block using various intra-prediction modes, e.g., during separate encoding passes, and intra-prediction unit 46 (or mode select unit 40, in some examples) may select an appropriate intra-prediction mode to use from the tested modes.

For example, intra-prediction unit 46 may calculate rate-distortion values using a rate-distortion analysis for the various tested intra-prediction modes, and select the intra-prediction mode having the best rate-distortion characteristics among the tested modes. Rate-distortion analysis generally determines an amount of distortion (or error) between an encoded block and an original, unencoded block that was encoded to produce the encoded block, as well as a bitrate (that is, a number of bits) used to produce the encoded block. Intra-prediction unit 46 may calculate ratios from the distortions and rates for the various encoded blocks to determine which intra-prediction mode exhibits the best rate-distortion value for the block.

After selecting an intra-prediction mode for a block, intra-prediction unit 46 may provide information indicative of the selected intra-prediction mode for the block to entropy encoding unit 56. Entropy encoding unit 56 may encode the information indicating the selected intra-prediction mode. Video encoder 20 may include in the transmitted bitstream configuration data, which may include a plurality of intra-prediction mode index tables and a plurality of modified intra-prediction mode index tables (also referred to as codeword mapping tables), definitions of encoding contexts for various blocks, and indications of a most probable intra-prediction mode, an intra-prediction mode index table, and a modified intra-prediction mode index table to use for each of the contexts.

Video encoder 20 forms a residual video block by subtracting the prediction data from mode select unit 40 from the original video block being coded. Summer 50 represents the component or components that perform this subtraction operation. Transform processing unit 52 applies a transform, such as a discrete cosine transform (DCT) or a conceptually similar transform, to the residual block, producing a video block comprising residual transform coefficient values. Transform processing unit 52 may perform other transforms which are conceptually similar to DCT. Wavelet transforms, integer transforms, sub-band transforms or other types of transforms could also be used. In any case, transform processing unit 52 applies the transform to the residual block, producing a block of residual transform coefficients. The transform may convert the residual information from a pixel value domain to a transform domain, such as a frequency domain. Transform processing unit 52 may send the resulting transform coefficients to quantization unit 54. Quantization unit 54 quantizes the transform coefficients to further reduce bit rate. The quantization process may reduce the bit depth associated with some or all of the coefficients. The degree of quantization may be modified by adjusting a quantization parameter. In some examples, quantization unit 54 may then perform a scan of the matrix including the quantized transform coefficients. Alternatively, entropy encoding unit 56 may perform the scan.

Following quantization, entropy encoding unit 56 entropy codes the quantized transform coefficients. For example, entropy encoding unit 56 may perform context adaptive variable length coding (CAVLC), context adaptive binary arithmetic coding (CABAC), syntax-based context-adaptive binary arithmetic coding (SBAC), probability interval partitioning entropy (PIPE) coding or another entropy coding technique. In the case of context-based entropy coding, context may be based on neighboring blocks. Following the entropy coding by entropy encoding unit 56, the encoded bitstream may be transmitted to another device (e.g., video decoder 30) or archived for later transmission or retrieval.

Inverse quantization unit 58 and inverse transform unit 60 apply inverse quantization and inverse transformation, respectively, to reconstruct the residual block in the pixel domain, e.g., for later use as a reference block. Motion compensation unit 44 may calculate a reference block by adding the residual block to a predictive block of one of the frames of reference frame memory 64. Motion compensation unit 44 may also apply one or more interpolation filters to the reconstructed residual block to calculate sub-integer pixel values for use in motion estimation. Summer 62 adds the reconstructed residual block to the motion compensated prediction block produced by motion compensation unit 44 to produce a reconstructed video block for storage in reference frame memory 64. The reconstructed video block may be used by motion estimation unit 42 and motion compensation unit 44 as a reference block to inter-code a block in a subsequent video frame.

FIG. 3 is a block diagram illustrating an example of a video decoder that may implement techniques in accordance with aspects described in this disclosure. Video decoder 30 may be configured to perform any or all of the techniques of this disclosure. mobile stations. A further connection is made, through the mobile service switching centre MSC, to outside the mobile communications network. Outside the mobile communications network there may further reside other network(s) connected to the mobile communications network by gateway(s) GTW, for example the Internet or a Public Switched Telephone Network (PSTN). In such an external network, or in the telecommunications network, there may be located video decoding or encoding stations, such as computers PC. In an embodiment of the invention, the mobile telecommunications network comprises a video server VSRVR to provide video data to a MS subscribing to such a service. This video data is compressed using the motion compensated video compression method as described earlier in this document. The video server may function as a gateway to an online video source or it may comprise previously recorded video clips. Typical videotelephony applications may involve, for example, two mobile stations or one mobile station MS and a videotelephone connected to the PSTN, a PC connected to the Internet or a H.261 compatible terminal connected either to the Internet or to the PSTN.

In view of the foregoing description it will be evident to a person skilled in the art that various modifications may be made within the scope of the invention. While a number of preferred embodiments of the invention have been described in detail, it should be apparent that many modifications and variations thereto are possible without departing the scope of the invention defined in the claims.

## Claims

1. A method for encoding video information, comprising:
- defining (401) a certain number of available macroblock segmentations (70, 71, 72, 83, 84, 85) that specify possible ways in which a macroblock can be segmented into blocks,
- defining a certain finite number of available macroblock-segmentation - prediction-method pairs (70A, 70B, 70C, 70D, 71A, 71B, 71C, 71D, 71E, 72A, 72B, 72C, 72D, 83, 84, 85) by defining (402) for each available macroblock segmentation (70, 71, 72, 83, 84, 85) at least one available prediction method as a predetermined subset of possible prediction methods (60A, 60B, 60C, 60D) in dependence of a respective available macroblock segmentation (70, 71, 72, 83, 84, 85), wherein each available prediction method (60A, 60B, 60C, 60D) defines for each block of a macroblock
one or more associated prediction blocks used in producing a prediction motion coefficient for a respective block of the macroblock, and
an associated method for deriving the prediction motion coefficient for said respective block of the macroblock from motion coefficients of said one or more associated prediction blocks,
- segmenting (403) a frame of video information into macroblocks,
- selecting (411) for a macroblock one of the available macroblock-segmentation - prediction-method pairs (70A, 70B, 70C, 70D, 71A, 71B, 71C, 71D, 71E, 72A, 72B, 72C, 72D, 83, 84, 85), wherein the selection of the macroblock-segmentation
- prediction-method pair is based on minimizing a cost function and
- segmenting the macroblock into blocks and deriving prediction motion coefficients for the blocks within said macroblock using the selected macroblock-segmentation - prediction-method pair (70A, 70B, 70C, 70D, 71A, 71B, 71C, 71D, 71E, 72A, 72B, 72C, 72D, 83, 84, 85).

2. A method for encoding video information according to claim 1, **characterized in that** each prediction block of said one or more associated prediction blocks is a neighboring block of the respective block of said macroblock.

3. A method for encoding video information according to claim 1 or 2, **characterized in that** at least one of the available macroblock-segmentation - prediction-method pairs defines that the prediction motion coefficients for a block within said macroblock are derived from the motion coefficients of only one prediction block.

4. A method for encoding video information according to claim 1, 2 or 3, **characterized in that** at least one of the available macroblock-segmentation - prediction-method pairs defines that the prediction motion coefficients for a block within said macroblock are derived from the motion coefficients of at least a first prediction block and a second prediction block.

5. A method for encoding video information according to claim 4, **characterized in that** the prediction motion coefficients for a block are derived from a median of the motion coefficients of at least a first prediction block and a second prediction block.

6. A method for encoding video information according to claim 1, 2, 3 or 4, **characterized in that** at least one of the available macroblock-segmentation - prediction-method pairs specifies that the prediction motion coefficients for a block within said macroblock are derived from motion coefficients of prediction blocks within said macroblock.

7. A method for encoding video information according to claim 1, 2, 3, 4 or 6, **characterized in that** a prediction block to be used in producing prediction motion coefficients for a block is defined as a block comprising a certain predetermined pixel, whose location is defined relative to said block.

8. A method for encoding video information according to claim 7, **characterized in that** the location of a predetermined pixel for a first block is different from the location of a predetermined pixel for a second block.

9. A method for encoding video information according to claim 1, 2, 3, 4, 6 or 7, **characterized in that** the number of prediction blocks per block is at most a certain number in any of the macroblock-segmentation - prediction-method pairs.

10. A method for encoding video information according to claim 9, **characterized in that** the number of prediction blocks per block is at most three.

11. A method for encoding video information according to claim 10, **characterized in that** a prediction block to be used in producing prediction motion coefficients for a block is defined as a block comprising a certain predetermined pixel, whose location is defined relative to said block.

12. A method for encoding video information according to claim 11, **characterized in that** at least for certain first blocks relating to certain first macroblock-segmentation - prediction-method pairs the predetermined pixels comprise the uppermost pixel adjacent to the block from the left, the leftmost pixel superjacent to the block and the pixel corner to corner with the upper right-hand pixel of the block.

13. A method for encoding video information according to claim 1, 2, 3, 4, 6, 7 or 9, **characterized in that** the macroblocks and the blocks resulting from the macroblock segmentations are quadrilateral.

14. A method for encoding video information according to claim 13, **characterized in that** the macroblocks and the blocks resulting from the macroblock segmentations are rectangular.

15. A method for encoding video information according to claim 14, **characterized in that** the available macroblock segmentations comprise a first macroblock segmentation resulting in one block, a second macroblock segmentation dividing a macroblock once with a vertical line, a third macroblock segmentation dividing a macroblock once with a horizontal line, a fourth macroblock segmentation dividing a macroblock once with a vertical line and once with a horizontal line, a fifth macroblock segmentation dividing a macroblock once with a vertical line and thrice with a horizontal line, and a sixth macroblock segmentation dividing a macroblock thrice with a vertical line and once with a horizontal line.

16. A method for encoding video information according to claim 14, **characterized in that** one prediction method is defined for each available macroblock segmentation, a prediction block for a block is defined as a block comprising a certain predetermined pixel, whose location is defined relative to said block, prediction coefficients for certain first blocks are derived from the motion coefficients of only one block-specific prediction block and prediction coefficients for certain second blocks are derived from the motion coefficients of more than one block-specific prediction blocks.

17. A method for encoding video information according to claim 1, 2, 3, 4, 6, 7, 9 or 13, **characterized in that** the macroblock segmentation of neighboring macroblocks affects the selection of the available macroblock-segmentation - prediction-method pairs for a macroblock.

18. A method for encoding video information according to claim 1, 2, 3, 4, 6, 7, 9, 13 or 17, **characterized in that** one macroblock-segmentation - prediction-method pair is defined for each available macroblock segmentation.

19. A method for encoding video information according to claim 18, **characterized in that** it comprises:
- transmitting information indicating the selected macroblock segmentation to a decoder or storing information indicating the selected macroblock-segmentation - prediction-method pair in a storage medium.

20. A method for encoding video information according to claim 1, 2, 3, 4, 6, 7, 9, 13, 17 or 18, **characterized in that** it comprises:
- transmitting information indicating the selected macroblock-segmentation - prediction-method pair to a decoder or storing information indicating the selected macroblock-segmentation - prediction-method pair in a storage medium.

21. A method for encoding video information according to claim 1, 2, 3, 4, 6, 7, 9, 13, 17, 18 or 20, **characterized in that** it comprises:
- estimating the motion of blocks within the macroblock with respect to a reference video frame,
- representing the motion of the blocks within the macroblock with a model comprising a set of basis functions and motion coefficients, and
- representing the motion coefficients thus obtained as a sum of the prediction motion coefficients and difference motion coefficients.

22. A method for encoding video information according to claim 21, **characterized in that** the model used to represent the motion of a block is a translational motion model.

23. A method for encoding video information according to claim 21, **characterized in that** the selection of the macroblock-segmentation - prediction-method pair is based on minimizing a cost function which includes at least a measure of a reconstruction error relating to a macroblock-segmentation - prediction-method pair and a measure of an amount of information required to indicate the macroblock-segmentation - prediction-method pair and to represent the difference motion coefficients of the blocks within said macroblock.

24. A method for encoding video information according to claim 21, **characterized in that** it further comprises:
- transmitting information indicating the selected macroblock-segmentation - prediction-method pair to a decoder or storing information indicating the selected macroblock-segmentation - prediction-method pair in a storage medium, and
- transmitting information about the difference motion coefficients to a decoder or storing information about the difference motion coefficients in a storage means.

25. A method for encoding video information according to claim 21, **characterized in that** it further comprises:
- reconstructing the motion of the blocks within the macroblock using the motion coefficients, basis functions and information about the macroblock segmentation,
- determining predicted video information using the reference video frame and the reconstructed motion of the blocks,
- determining corresponding prediction error video information based on a difference between the predicted video information and the video information of the macroblock,
- coding the prediction error video information and representing it with prediction error coefficients, and
- transmitting information about the prediction error coefficients to a decoder or storing information about the prediction error coefficients in a storage means.

26. A method for decoding encoded video information, **characterized in that** it comprises:
- defining (501) a certain number of available macroblock segmentations(70, 71, 72, 83, 84, 85) that specify possible ways in which a macroblock can be segmented into blocks,
- defining a certain finite number of available macroblock-segmentation - prediction-method pairs (70A, 70B, 70C, 70D, 71A, 71B, 71C, 71D, 71E, 72A, 72B, 72C, 72D, 83, 84, 85) by defining (502) for each available macroblock segmentation (70, 71, 72, 83, 84, 85) at least one available prediction method as a predetermined subset of possible prediction methods (60A, 60B, 60C, 60D) in dependence of a respective available macroblock segmentation (70, 71, 72, 83, 84, 85), wherein each available prediction method (60A, 60B, 60C, 60D) defines for each block of a macroblock
one or more associated prediction blocks used in producing a prediction motion coefficient for a respective block of the macroblock, and
an associated method for deriving the prediction motion coefficient for said respective block of the macroblock from motion coefficients of said one or more associated prediction blocks,
- receiving (503) information indicating at least a macroblock segmentation (70, 71, 72, 83, 84, 85) selected for a macroblock in said encoded video information, and
- determining (505) a prediction method relating to the macroblock segmentation (70, 71, 72, 83, 84, 85) of said macroblock with reference to the defined macroblock-segmentation - prediction-method pairs (70A, 70B, 70C, 70D, 71A, 71B, 71C, 71D, 71E, 72A, 72B, 72C, 72D, 83, 84, 85) and deriving prediction motion coefficients for blocks within said macroblock using the determined prediction method.

27. A method for decoding encoded video information according to claim 26, **characterized in that** said receiving of information indicating at least a macroblock segmentation comprises receiving an indication of a selected macroblock-segmentation - prediction-method pair.

28. A method for decoding encoded video information according to claim 26, **characterized in that** at least two macroblock segmentation - prediction method pairs relating to a certain available macroblock segmentation are defined.

29. A method for decoding encoded video information according to claim 26, **characterized in that** only one prediction method is defined for each available macroblock segmentation.

30. A method for decoding encoded video information according to claim 26, **characterized in that** it comprises:
- receiving information about difference motion coefficients describing motion of blocks within a macroblock, and
- reconstructing motion coefficients for the blocks within said macroblock as a sum of the derived prediction motion coefficients and the difference motion coefficients.

31. A method for decoding encoded video information according to claim 30, **characterized in that** it comprises:
- receiving information about prediction error coefficients describing prediction error video information, and
- determining a decoded frame of video information using at least the motion coefficients and the prediction error video information.

32. An encoder for performing motion compensated encoding of video information, comprising:
- means for receiving a frame of video information,
- means (111) for segmenting the frame of video information into macroblocks,
- means (112) for specifying a certain number of available macroblock segmentations(70, 71, 72, 83, 84, 85) that define possible ways in which a macroblock can be segmented into blocks,
- means (122) for specifying a certain finite number of available macroblock-segmentation - prediction-method pairs (70A, 70B, 70C, 70D, 71A, 71B, 71C, 71D, 71E, 72A, 72B, 72C, 72D, 83, 84, 85) by defining at least one available prediction method for each available macroblock segmentation (70, 71, 72, 83, 84, 85) as a predetermined subset of possible prediction methods (60A, 60B, 60C, 60D) in dependence of a respective available macroblock segmentation (70, 71, 72, 83, 84, 85), wherein each available prediction method (60A, 60B, 60C, 60D) defines for each block of a macroblock
one or more associated prediction blocks used in producing a prediction motion coefficient for a respective block of the macroblock, and
an associated method for deriving the prediction motion coefficient for said respective block of the macroblock from motion coefficients of said one or more associated prediction blocks,
- means (125) for selecting one macroblock-segmentation - prediction method pair (70A, 70B, 70C, 70D, 71A, 71B, 71C, 71D, 71E, 72A, 72B, 72C, 72D, 83, 84, 85) among the available macroblock-segmentation - prediction method pairs (70A, 70B, 70C, 70D, 71A, 71B, 71C, 71D, 71E, 72A, 72B, 72C, 72D, 83, 84, 85), wherein the selection of the macroblock-segmentation - prediction-method pair is based on minimizing a cost function,
- means for segmenting a macroblock using the macroblock segmentation(70, 71, 72, 83, 84, 85) specified by the selected macroblock-segmentation - prediction-method pair (70A, 70B, 70C, 70D, 71A, 71B, 71C, 71D, 71E, 72A, 72B, 72C, 72D, 83, 84, 85), and
- means (123) for deriving macroblock-segmentation-specific prediction motion coefficients for blocks within said macroblock using the prediction method specified by the selected macroblock-segmentation - prediction-method pair (70A, 70B, 70C, 70D, 71A, 71B, 71C, 71D, 71E, 72A, 72B, 72C, 72D, 83, 84, 85).

33. An encoder for performing motion compensated encoding of video information according to claim 32, **characterized in that** it further comprises:
- memory means for storing a reference video frame,
- means for estimating a motion field of blocks in the frame of video information using at least the reference video frame,
- means for producing motion coefficients describing the estimated motion fields, and
- means for producing difference motion coefficients using the motion coefficients and the prediction motion coefficients.

34. A decoder for performing motion compensated decoding of encoded video information, comprising:
- input means for receiving encoded video information,
- means for defining a certain number of available macroblock segmentations (70, 71, 72, 83, 84, 85) that specify possible ways in which a macroblock can be segmented into blocks,
- means for specifying a certain finite number of available macroblock-segmentation - prediction-method pairs (70A, 70B, 70C, 70D, 71A, 71B, 71C, 71D, 71E, 72A, 72B, 72C, 72D, 83, 84, 85) by defining at least one available prediction method for each available macroblock segmentation (70, 71, 72, 83, 84, 85) as a predetermined subset of possible prediction methods (60A, 60B, 60C, 60D) in dependence of a respective available macroblock segmentation (70, 71, 72, 83, 84, 85), wherein each available prediction method (60A, 60B, 60C, 60D) defines for each block of a macroblock
one or more associated prediction blocks used in producing a prediction motion coefficient for a respective block of the macroblock, and
an associated method for deriving the prediction motion coefficient for said respective block of the macroblock from motion coefficients of said one or more associated prediction blocks,
- input means for receiving information indicating at least the macroblock segmentation (70, 71, 72, 83, 84, 85) selected for a macroblock,
- means (132) for determining the prediction-method relating to the segmentation of the macroblock with reference to the defined macroblock-segmentation - prediction-method pairs (70A, 70B, 70C, 70D, 71A, 71B, 71C, 71D, 71E, 72A, 72B, 72C, 72D, 83, 84, 85), and
- means (131) for deriving prediction motion coefficients for blocks within said macroblock using the determined prediction method.

35. A decoder for performing decoding of encoded video information according to claim 34, **characterized in that** the decoder is configured to receive an indication of a selected macroblock-segmentation - prediction-method pair.

36. A decoder for performing decoding of encoded video information according to claim 34, **characterized in that** it further comprises:
- means for determining difference motion coefficients of the blocks within said macroblock based on the received encoded video information, and
- means for reconstructing motion coefficients for the blocks within said macroblock using the derived prediction motion coefficients and the difference motion coefficients.

37. A decoder for performing decoding of encoded video information according to claim 34, **characterized in that** the decoder is configured to define at least two macroblock segmentation - prediction method pairs relating to a certain available macroblock segmentation.

38. A decoder for performing decoding of encoded video information according to claim 34, **characterized in that** the decoder is configured to define only one prediction method for each available macroblock segmentation.

39. A computer program element for performing motion compensated encoding of video information, comprising:
- means for receiving a frame of video information,
- means (111) for segmenting the frame of video information into macroblocks,
- means (112) for specifying a certain number of available macroblock segmentations (70, 71, 72, 83, 84, 85) that define possible ways in which a macroblock can be segmented into blocks,
- means (122) for specifying a certain finite number of available macroblock-segmentation - prediction-method pairs (70A, 70B, 70C, 70D, 71A, 71B, 71C, 71D, 71E, 72A, 72B, 72C, 72D, 83, 84, 85) by defining at least one available prediction method for each available macroblock segmentation (70, 71, 72, 83, 84, 85) as a predetermined subset of possible prediction methods (60A, 60B, 60C, 60D) in dependence of a given available macroblock segmentation (70, 71, 72, 83, 84, 85), wherein each available prediction method (60A, 60B, 60C, 60D) defines for each block of a macroblock
one or more associated prediction blocks used in producing a prediction motion coefficient for a respective block of the macroblock, and
an associated method for deriving the prediction motion coefficient for said respective block of the macroblock from the motion coefficients of said one or more associated prediction blocks,
- means (125) for selecting one macroblock-segmentation - prediction method pair (70A, 70B, 70C, 70D, 71A, 71B, 71C, 71D, 71E, 72A, 72B, 72C, 72D, 83, 84, 85) among the available macroblock-segmentation - prediction method pairs (70A, 70B, 70C, 70D, 71A, 71B, 71C, 71D, 71E, 72A, 72B, 72C, 72D, 83, 84, 85) wherein the selection of the macroblock-segmentation - prediction-method pair is based on minimizing a cost function,
- means for segmenting a macroblock using the macroblock segmentation (70, 71, 72, 83, 84, 85) specified by the selected macroblock-segmentation - prediction-method pair (70A, 70B, 70C, 70D, 71A, 71B, 71C, 71D, 71E, 72A, 72B, 72C, 72D, 83, 84, 85), and
- means (125) for deriving macroblock-segmentation-specific prediction motion coefficients for blocks within said macroblock using the prediction method specified by the selected macroblock-segmentation - prediction-method pair (70A, 70B, 70C, 70D, 71A, 71B, 71C, 71D, 71E, 72A, 72B, 72C, 72D, 83, 84, 85).

40. A computer program element as specified in claim 39, embodied on a computer readable medium.

41. A computer program element for performing motion compensated decoding of encoded video information, comprising:
- input means for receiving encoded video information,
- means for defining a certain number of available macroblock segmentations (70, 71, 72, 83, 84, 85) that specify possible ways in which a macroblock can be segmented into blocks,
- means for specifying a certain finite number of available macroblock-segmentation - prediction-method pairs (70A, 70B, 70C, 70D, 71A, 71B, 71C, 71D, 71E, 72A, 72B, 72C, 72D, 83, 84, 85) by defining at least one available prediction method for each available macroblock segmentation (70, 71, 72, 83, 84, 85) as a predetermined subset of possible prediction methods (60A, 60B, 60C, 60D) in dependence of a given available macroblock segmentation (70, 71, 72, 83, 84, 85), wherein each available prediction method (60A, 60B, 60C, 60D) defines for each block of a macroblock
one or more associated prediction blocks used in producing a prediction motion coefficient for a respective block of the macroblock, and
an associated method for deriving the prediction motion coefficient for said respective block of the macroblock from the motion coefficients of said one or more prediction blocks,
- input means for receiving information indicating at least the macroblock segmentation (70, 71, 72, 83, 84, 85) selected for a macroblock,
- means (132) for determining the prediction-method relating to the segmentation of the macroblock with reference to the defined macroblock-segmentation - prediction-method pairs (70A, 70B, 70C, 70D, 71A, 71B, 71C, 71D, 71E, 72A, 72B, 72C, 72D, 83, 84, 85), and
- means (131) for deriving prediction motion coefficients for blocks within said macroblock using the determined prediction method.

42. A computer program element for performing motion compensated decoding of encoded video information according to claim 41, wherein at least two macroblock segmentation - prediction method pairs relating to a certain available macroblock segmentation are defined.

43. A computer program element for performing motion compensated decoding of encoded video information according to claim 41, wherein only one prediction method for each available macroblock segmentation is defined.

44. A computer program element as specified in claim 41, 42 or 43, embodied on a computer readable medium.

45. A storage device comprising an encoder according to claim 32.

46. A mobile station comprising an encoder according to claim 32.

47. A mobile station comprising a decoder according to claim 34.

48. A network element comprising an encoder according to claim 32.

49. A network element according to claim 48, wherein the network element is a network element of a mobile telecommunication network.

## Patentansprüche

1. Verfahren zum Codieren von Videoinformationen, umfassend:
- Definieren (401) einer bestimmten Anzahl von verfügbaren Makroblocksegmentierungen (70, 71, 72, 83, 84, 85), die mögliche Wege angeben, auf die ein Makroblock in Blöcke segmentiert werden kann,
- Definieren einer bestimmten endlichen Anzahl von verfügbaren Makroblocksegmentierung-Vorhersageverfahren-Paaren (70A, 70B, 70C, 70D, 71A, 71B, 71C, 71D, 71E, 72A, 72B, 72C, 72D, 83, 84, 85) durch Definieren (402), für jede verfügbare Makroblocksegmentierung (70, 71, 72, 83, 84, 85), mindestens eines verfügbaren Vorhersageverfahrens als eine vorbestimmte Teilmenge möglicher Vorhersageverfahren (60A, 60B, 60C, 60D) abhängig von einer jeweiligen verfügbaren Makroblocksegmentierung (70, 71, 72, 83, 84, 85), wobei jedes verfügbare Vorhersageverfahren (60A, 60B, 60C, 60D) für jeden Block eines Makroblocks definiert:
einen oder mehrere assoziierte Vorhersageblöcke, die zum Erzeugen eines Vorhersagebewegungskoeffizienten für einen jeweiligen Block des Makroblocks verwendet werden, und
ein zugehöriges Verfahren zum Ableiten des Vorhersagebewegungskoefizzienten für den jeweiligen Block des Makroblocks aus Bewegungskoeffizienten des einen oder der mehreren assoziierten Vorhersageblöcke,
- Segmentieren (403) eines Rahmens mit Videoinformationen in Makroblöcke,
- Auswählen (411) eines der verfügbaren Makroblocksegmentierung-Vorhersageverfahren-Paare (70A, 70B, 70C, 70D, 71A, 71B, 71C, 71D, 71E, 72A, 72B, 72C, 72D, 83, 84, 85) für einen Makroblock, wobei die Auswahl des Makroblocksegmentierung-Vorhersageverfahren-Paars auf einem Minimieren einer Kostenfunktion beruht, und
- Segmentieren des Makroblocks in Blöcke und Ableiten von Vorhersagebewegungskoeffizienten für die Blöcke innerhalb des Makroblocks unter Verwendung des ausgewählten Makroblocksegmentierung-Vorhersageverfahren-Paars (70A, 70B, 70C, 70D, 71A, 71B, 71C, 71D, 71E, 72A, 72B, 72C, 72D, 83, 84, 85).

2. Verfahren zum Codieren von Videoinformationen nach Anspruch 1, **dadurch gekennzeichnet, dass** jeder Vorhersageblock des einen oder der mehreren assoziierten Vorhersageblöcke ein Nachbarblock des jeweiligen Blocks des Makroblocks ist.

3. Verfahren zum Codieren von Videoinformationen nach Anspruch 1 oder 2, **dadurch gekennzeichnet, dass** mindestens eines der verfügbaren Makroblocksegmentierung-Vorhersageverfahren-Paare definiert, dass die Vorhersagebewegungskoeffizienten für einen Block innerhalb des Makroblocks aus den Bewegungskoeffizienten nur eines Vorhersageblocks abgeleitet sind.

4. Verfahren zum Codieren von Videoinformationen nach Anspruch 1, 2 oder 3, **dadurch gekennzeichnet, dass** mindestens eines der verfügbaren Makroblocksegmentierung-Vorhersageverfahren-Paare definiert, dass die Vorhersagebewegungskoeffizienten für einen Block innerhalb des Makroblocks aus den Bewegungskoeffizienten von mindestens einem ersten Vorhersageblock und einem zweiten Vorhersageblock abgeleitet sind.

5. Verfahren zum Codieren von Videoinformationen nach Anspruch 4, **dadurch gekennzeichnet, dass** die Vorhersagebewegungskoeffizienten für einen Block aus einem Medianwert der Bewegungskoeffizienten von mindestens einem ersten Vorhersageblock und einem zweiten Vorhersageblock abgeleitet sind.

6. Verfahren zum Codieren von Videoinformationen nach Anspruch 1, 2, 3 oder 4, **dadurch gekennzeichnet, dass** mindestens eines der verfügbaren Makroblocksegmentierung-Vorhersageverfahren-Paare angibt, dass die Vorhersagebewegungskoeffizienten für einen Block innerhalb des Makroblocks aus Bewegungskoeffizienten von Vorhersageblöcken innerhalb des Makroblocks abgeleitet sind.

7. Verfahren zum Codieren von Videoinformationen nach Anspruch 1, 2, 3, 4 oder 6, **dadurch gekennzeichnet, dass** ein Vorhersageblock, der beim Erzeugen von Vorhersagebewegungskoeffizienten für einen Block zu verwenden ist, als ein Block definiert ist, der ein bestimmtes vorbestimmtes Pixel umfasst, dessen Position relativ zum Block definiert ist.

8. Verfahren zum Codieren von Videoinformationen nach Anspruch 7, **dadurch gekennzeichnet, dass** die Position eines vorbestimmten Pixels für einen ersten Block von der Position eines vorbestimmten Pixels für einen zweiten Block verschieden ist.

9. Verfahren zum Codieren von Videoinformationen nach Anspruch 1, 2, 3, 4, 6 oder 7, **dadurch gekennzeichnet, dass** die Anzahl von Vorhersageblöcken pro Block maximal eine bestimmte Anzahl in irgendeinem der Makroblocksegmentierung-Vorhersageverfahren-Paare ist.

10. Verfahren zum Codieren von Videoinformationen nach Anspruch 9, **dadurch gekennzeichnet, dass** die Anzahl von Vorhersageblöcken pro Block maximal drei beträgt.

11. Verfahren zum Codieren von Videoinformationen nach Anspruch 10, **dadurch gekennzeichnet, dass** ein Vorhersageblock, der beim Erzeugen von Vorhersagebewegungskoeffizienten für einen Block zu verwenden ist, als ein Block definiert ist, der ein bestimmtes vorbestimmtes Pixel umfasst, dessen Position relativ zum Block definiert ist.

12. Verfahren zum Codieren von Videoinformationen nach Anspruch 11, **dadurch gekennzeichnet, dass** die vorbestimmten Pixel zumindest für bestimmte erste Blöcke, die mit bestimmten ersten Makroblocksegmentierung-Vorhersageverfahren-Paaren verbunden sind, das oberste Pixel neben dem Block von links, das über dem Block darüberliegende Pixel ganz links und die Pixel Ecke an Ecke zum oberen rechten Pixel des Blocks umfassen.

13. Verfahren zum Codieren von Videoinformationen nach Anspruch 1, 2, 3, 4, 6, 7 oder 9, **dadurch gekennzeichnet, dass** die Makroblöcke und die Blöcke, die sich aus der Makroblocksegmentierung ergeben, vierseitig sind.

14. Verfahren zum Codieren von Videoinformationen nach Anspruch 13, **dadurch gekennzeichnet, dass** die Makroblöcke und die Blöcke, die sich aus der Makroblocksegmentierung ergeben, rechteckig sind.

15. Verfahren zum Codieren von Videoinformationen nach Anspruch 14, **dadurch gekennzeichnet, dass** die verfügbaren Makroblocksegmentierungen eine erste Makroblocksegmentierung, die einen einzelnen Block ergibt, eine zweite Makroblocksegmentierung, die einen Makroblock einmal mit einer vertikalen Linie aufteilt, eine dritte Makroblocksegmentierung, die einen Makroblock einmal mit einer horizontalen Linie aufteilt, eine vierte Makroblocksegmentierung, die einen Makroblock einmal mit einer vertikalen Linie und einmal mit einer horizontalen Linie aufteilt, eine fünfte Makroblocksegmentierung, die einen Makroblock einmal mit einer vertikalen Linie und dreimal mit einer horizontalen Linie aufteilt, und eine sechste Makroblocksegmentierung umfassen, die einen Makroblock dreimal mit einer vertikalen Linie und einmal mit einer horizontalen Linie aufteilt.

16. Verfahren zum Codieren von Videoinformationen nach Anspruch 14, **dadurch gekennzeichnet, dass** ein Vorhersageverfahren für jede verfügbare Makroblocksegmentierung definiert ist, ein Vorhersageblock für einen Block als ein Block definiert ist, der ein bestimmtes vorbestimmtes Pixel umfasst, dessen Position relativ zum Block definiert ist, Vorhersagekoeffizienten für bestimmte erste Blöcke aus den Bewegungskoeffizienten von nur einem blockspezifischen Vorhersageblock abgeleitet sind und Vorhersagekoeffizienten für bestimmte zweite Blöcke aus den Bewegungskoeffizienten mehr als eines blockspezifischen Vorhersageblocks abgeleitet sind.

17. Verfahren zum Codieren von Videoinformationen nach Anspruch 1, 2, 3, 4, 6, 7, 9 oder 13, **dadurch gekennzeichnet, dass** die Makroblocksegmentierung von benachbarten Makroblöcken die Auswahl der verfügbaren Makroblocksegmentierung-Vorhersageverfahren-Paare für einen Makroblock beeinflusst.

18. Verfahren zum Codieren von Videoinformationen nach Anspruch 1, 2, 3, 4, 6, 7, 9, 13 oder 17, **dadurch gekennzeichnet, dass** für jede verfügbare Makroblocksegmentierung ein Makroblocksegmentierung-Vorhersageverfahren-Paar definiert ist.

19. Verfahren zum Codieren von Videoinformationen nach Anspruch 18, **dadurch gekennzeichnet, dass** es umfasst:
- Senden von Informationen, die einem Decodierer die ausgewählte Makroblocksegmentierung anzeigen, oder Speichern von Informationen, die das ausgewählte Makroblocksegmentierung-Vorhersageverfahren-Paar anzeigen, in einem Speichermedium.

20. Verfahren zum Codieren von Videoinformationen nach Anspruch 1, 2, 3, 4, 6, 7, 9, 13, 17 oder 18, **dadurch gekennzeichnet, dass** es umfasst:
- Senden von Informationen, die einem Decodierer das ausgewählte Makroblocksegmentierung-Vorhersageverfahren-Paar anzeigen, oder Speichern von Informationen, die das ausgewählte Makroblocksegmentierung-Vorhersageverfahren-Paar anzeigen, in einem Speichermedium.

21. Verfahren zum Codieren von Videoinformationen nach Anspruch 1, 2, 3, 4, 6, 7, 9, 13, 17, 18 oder 20, **dadurch gekennzeichnet, dass** es umfasst:
- Abschätzen der Bewegung von Blöcken innerhalb des Makroblocks in Bezug auf einen Bezugsvideorahmen,
- Darstellen der Bewegung der Blöcke innerhalb des Makroblocks mit einem Modell, das einen Satz von Basisfunktionen und Bewegungskoeffizienten umfasst, und
- Darstellen der so erhaltenen Bewegungskoeffizienten als eine Summe der Vorhersagebewegungskoeffizienten und Differenzbewegungskoeffizienten.

22. Verfahren zum Codieren von Videoinformationen nach Anspruch 21, **dadurch gekennzeichnet, dass** das Modell, das verwendet wird, um die Bewegung eines Blocks darzustellen, ein Translationsbewegungsmodell ist.

23. Verfahren zum Codieren von Videoinformationen nach Anspruch 21, **dadurch gekennzeichnet, dass** die Auswahl des Makroblocksegmentierung-Vorhersageverfahren-Paars auf einem Minimieren einer Kostenfunktion beruht, die zumindest ein Maß eines Rekonstruktionsfehlers in Bezug auf ein Makroblocksegmentierung-Vorhersageverfahren-Paar und ein Maß einer Informationsmenge enthält, die erforderlich ist, um das Makroblocksegmentierung-Vorhersageverfahren-Paar anzuzeigen und die Differenzbewegungskoeffizienten der Blöcke innerhalb des Makroblocks darzustellen.

24. Verfahren zum Codieren von Videoinformationen nach Anspruch 21, **dadurch gekennzeichnet, dass** es ferner umfasst:
- Senden von Informationen, die einem Decodierer das ausgewählte Makroblocksegmentierung-Vorhersageverfahren-Paar anzeigen, oder Speichern von Informationen, die das ausgewählte Makroblocksegmentierung-Vorhersageverfahren-Paar anzeigen, in einem Speichermedium und
- Senden von Informationen über die Differenzbewegungskoeffizienten an einen Decodierer oder Speichern von Informationen über die Differenzbewegungskoeffizienten in einem Speichermittel.

25. Verfahren zum Codieren von Videoinformationen nach Anspruch 21, **dadurch gekennzeichnet, dass** es ferner umfasst:
- Rekonstruieren der Bewegung der Blöcke innerhalb des Makroblocks unter Verwendung der Bewegungskoeffizienten, Basisfunktionen und Informationen über die Makroblocksegmentierung,
- Ermitteln von vorhergesagten Videoinformationen unter Verwendung des Bezugsvideorahmens und der rekonstruierten Bewegung der Blöcke,
- Ermitteln von entsprechenden Vorhersagefehler-Videoinformationen auf Grundlage einer Differenz zwischen den vorhergesagten Videoinformationen und den Videoinformationen des Makroblocks,
- Codieren der Vorhersagefehler-Videoinformationen und Darstellen dieser durch Vorhersagefehlerkoeffizienten und
- Senden von Informationen über die Vorhersagefehlerkoeffizienten an einen Decodierer oder Speichern von Informationen über die Vorhersagefehlerkoeffizienten in einem Speichermittel.

26. Verfahren zum Decodieren von codierten Videoinformationen, **dadurch gekennzeichnet, dass** es umfasst:
- Definieren (501) einer bestimmten Anzahl von verfügbaren Makroblocksegmentierungen (70, 71, 72, 83, 84, 85), die mögliche Wege angeben, auf die ein Makroblock in Blöcke segmentiert werden kann,
- Definieren einer bestimmten endlichen Anzahl von verfügbaren Makroblocksegmentierung-Vorhersageverfahren-Paaren (70A, 70B, 70C, 70D, 71A, 71B, 71C, 71D, 71E, 72A, 72B, 72C, 72D, 83, 84, 85) durch Definieren (502), für jede verfügbare Makroblocksegmentierung (70, 71, 72, 83, 84, 85), mindestens eines verfügbaren Vorhersageverfahrens als eine vorbestimmte Teilmenge möglicher Vorhersageverfahren (60A, 60B, 60C, 60D) abhängig von einer jeweiligen verfügbaren Makroblocksegmentierung (70, 71, 72, 83, 84, 85), wobei jedes verfügbare Vorhersageverfahren (60A, 60B, 60C, 60D) für jeden Block eines Makroblocks definiert:
einen oder mehrere assoziierte Vorhersageblöcke, die zum Erzeugen eines Vorhersagebewegungskoeffizienten für einen jeweiligen Block des Makroblocks verwendet werden, und
ein zugehöriges Verfahren zum Ableiten der Vorhersagebewegungskoefizzienten für den jeweiligen Block des Makroblocks aus Bewegungskoeffizienten des einen oder der mehreren assoziierten Vorhersageblöcke,
- Empfangen (503) von Informationen, die zumindest eine Makroblocksegmentierung (70, 71, 72, 83, 84, 85) anzeigen, die für einen Makroblock in den codierten Videoinformationen ausgewählt wurde, und
- Ermitteln (505) eines Vorhersageverfahrens, das mit der Makroblocksegmentierung (70, 71, 72, 83, 84, 85) des Makroblocks verbunden ist, in Bezug auf die definierten Makroblocksegmentierung-Vorhersageverfahren-Paare (70A, 70B, 70C, 70D, 71A, 71B, 71C, 71D, 71E, 72A, 72B, 72C, 72D, 83, 84, 85) und Ableiten von Vorhersagebewegungskoeffizienten für Blöcke innerhalb des Makroblocks unter Verwendung des ermittelten Vorhersageverfahrens.

27. Verfahren zum Decodieren von codierten Videoinformationen nach Anspruch 26, **dadurch gekennzeichnet, dass** das Empfangen von Informationen, die zumindest eine Makroblocksegmentierung anzeigen, ein Empfangen eines Hinweises auf ein ausgewähltes Makroblocksegmentierung-Vorhersageverfahren-Paar umfasst.

28. Verfahren zum Decodieren von codierten Videoinformationen nach Anspruch 26, **dadurch gekennzeichnet, dass** mindestens zwei Makroblocksegmentierung-Vorhersageverfahren-Paare in Bezug auf eine verfügbare Makroblocksegmentierung definiert sind.

29. Verfahren zum Decodieren von codierten Videoinformationen nach Anspruch 26, **dadurch gekennzeichnet, dass** für jede verfügbare Makroblocksegmentierung nur ein Vorhersageverfahren definiert ist.

30. Verfahren zum Decodieren von codierten Videoinformationen nach Anspruch 26, **dadurch gekennzeichnet, dass** es umfasst:
- Empfangen von Informationen über Differenzbewegungskoeffizienten, die eine Bewegung von Blöcken innerhalb eines Makroblocks beschreiben, und
- Rekonstruieren von Bewegungskoeffizienten für die Blöcke innerhalb des Makroblocks als eine Summe der abgeleiteten Vorhersagebewegungskoeffizienten und der Differenzbewegungskoeffizienten.

31. Verfahren zum Decodieren von codierten Videoinformationen nach Anspruch 30, **dadurch gekennzeichnet, dass** es umfasst:
- Empfangen von Informationen über Vorhersagefehlerkoeffizienten, die Vorhersagefehler-Videoinformationen beschreiben, und
- Ermitteln eines decodieren Rahmens mit Videoinformationen unter Verwendung zumindest der Bewegungskoeffizienten und der Vorhersagefehler-Videoinformationen.

32. Codierer zum Durchführen von bewegungskompensiertem Codieren von Videoinformationen, umfassend:
- Mittel zum Empfangen eines Rahmens mit Videoinformationen,
- Mittel (111) zum Segmentieren des Rahmens mit Videoinformationen in Makroblöcke,
- Mittel (112) zum Angeben einer bestimmten Anzahl von verfügbaren Makroblocksegmentierungen (70, 71, 72, 83, 84, 85), die mögliche Wege definieren, auf die ein Makroblock in Blöcke segmentiert werden kann,
- Mittel (122) zum Angeben einer bestimmten endlichen Anzahl von verfügbaren Makroblocksegmentierung-Vorhersageverfahren-Paaren (70A, 70B, 70C, 70D, 71A, 71B, 71C, 71D, 71E, 72A, 72B, 72C, 72D, 83, 84, 85) durch Definieren, für jede verfügbare Makroblocksegmentierung (70, 71, 72, 83, 84, 85), mindestens eines verfügbaren Vorhersageverfahrens als eine vorbestimmte Teilmenge möglicher Vorhersageverfahren (60A, 60B, 60C, 60D) abhängig von einer jeweiligen verfügbaren Makroblocksegmentierung (70, 71, 72, 83, 84, 85), wobei jedes verfügbare Vorhersageverfahren (60A, 60B, 60C, 60D) für jeden Block eines Makroblocks definiert:
einen oder mehrere assoziierte Vorhersageblöcke, die zum Erzeugen eines Vorhersagebewegungskoeffizienten für einen jeweiligen Block des Makroblocks verwendet werden, und
ein zugehöriges Verfahren zum Ableiten der Vorhersagebewegungskoefizzienten für den jeweiligen Block des Makroblocks aus Bewegungskoeffizienten des einen oder der mehreren assoziierten Vorhersageblöcke,
- Mittel (125) zum Auswählen eines Makroblocksegmentierung-Vorhersageverfahren-Paars (70A, 70B, 70C, 70D, 71A, 71B, 71C, 71D, 71E, 72A, 72B, 72C, 72D, 83, 84, 85) aus den verfügbaren Makroblocksegmentierung-Vorhersageverfahren-Paaren (70A, 70B, 70C, 70D, 71A, 71B, 71C, 71D, 71E, 72A, 72B, 72C, 72D, 83, 84, 85), wobei die Auswahl des Makroblocksegmentierung-Vorhersageverfahren-Paars auf einem Minimieren einer Kostenfunktion beruht,
- Mittel zum Segmentieren eines Makroblocks unter Verwendung der Makroblocksegmentierung (70, 71, 72, 83, 84, 85), die durch das ausgewählte Makroblocksegmentierung-Vorhersageverfahren-Paar (70A, 70B, 70C, 70D, 71A, 71B, 71C, 71D, 71E, 72A, 72B, 72C, 72D, 83, 84, 85) angegeben wird, und
- Mittel (123) zum Ableiten von makroblocksegmentierungsspezifischen Vorhersagebewegungskoeffizienten für Blöcke innerhalb des Makroblocks unter Verwendung des Vorhersageverfahrens, das vom ausgewählten Makroblocksegmentierung-Vorhersageverfahren-Paar (70A, 70B, 70C, 70D, 71A, 71B, 71C, 71D, 71E, 72A, 72B, 72C, 72D, 83, 84, 85) angegeben wird.

33. Codierer zum Durchführen von bewegungskompensiertem Codieren von Videoinformationen nach Anspruch 32, **dadurch gekennzeichnet, dass** er ferner umfasst:
- Speichermittel zum Speichern eines Bezugsvideorahmens,
- Mittel zum Abschätzen eines Bewegungsfelds von Blöcken im Rahmen mit Videoinformationen unter Verwendung von zumindest dem Bezugsvideorahmen,
- Mittel zum Erzeugen von Bewegungskoeffizienten, die die geschätzten Bewegungsfelder beschreiben, und
- Mittel zum Erzeugen von Differenzbewegungskoeffizienten unter Verwendung der Bewegungskoeffizienten und der Vorhersagebewegungskoeffizienten.

34. Decodierer zum Durchführen von bewegungskompensiertem Decodieren von codierten Videoinformationen, umfassend:
- Eingabemittel zum Empfangen von codierten Videoinformationen,
- Mittel zum Definieren einer bestimmten Anzahl von verfügbaren Makroblocksegmentierungen (70, 71, 72, 83, 84, 85), die mögliche Wege angeben, auf die ein Makroblock in Blöcke segmentiert werden kann,
- Mittel zum Angeben einer bestimmten endlichen Anzahl von verfügbaren Makroblocksegmentierung-Vorhersageverfahren-Paaren (70A, 70B, 70C, 70D, 71A, 71B, 71C, 71D, 71E, 72A, 72B, 72C, 72D, 83, 84, 85) durch Definieren, für jede verfügbare Makroblocksegmentierung (70, 71, 72, 83, 84, 85), mindestens eines verfügbaren Vorhersageverfahrens als eine vorbestimmte Teilmenge möglicher Vorhersageverfahren (60A, 60B, 60C, 60D) abhängig von einer jeweiligen verfügbaren Makroblocksegmentierung (70, 71, 72, 83, 84, 85), wobei jedes verfügbare Vorhersageverfahren (60A, 60B, 60C, 60D) für jeden Block eines Makroblocks definiert:
einen oder mehrere assoziierte Vorhersageblöcke, die zum Erzeugen eines Vorhersagebewegungskoeffizienten für einen jeweiligen Block des Makroblocks verwendet werden, und
ein zugehöriges Verfahren zum Ableiten der Vorhersagebewegungskoefizzienten für den jeweiligen Block des Makroblocks aus Bewegungskoeffizienten des einen oder der mehreren assoziierten Vorhersageblöcke,
- Eingabemittel zum Empfangen von Informationen, die zumindest die für einen Makroblock ausgewählte Makroblocksegmentierung (70, 71, 72, 83, 84, 85) anzeigen,
- Mittel (132) zum Ermitteln des Vorhersageverfahrens, das mit der Segmentierung des Makroblocks verbunden ist, unter Bezugnahme auf die definierten ausgewählten Makroblocksegmentierung-Vorhersageverfahren-Paare (70A, 70B, 70C, 70D, 71A, 71B, 71C, 71D, 71E, 72A, 72B, 72C, 72D, 83, 84, 85) und
- Mittel (131) zum Ableiten von Vorhersagebewegungskoeffizienten für Blöcke innerhalb des Makroblocks unter Verwendung des ermittelten Vorhersageverfahrens.

35. Decodierer zum Durchführen von Decodieren von codierten Videoinformationen nach Anspruch 34, **dadurch gekennzeichnet, dass** der Decodierer ausgelegt ist, einen Hinweis auf ein ausgewähltes Makroblocksegmentierung-Vorhersageverfahren-Paar zu empfangen.

36. Decodierer zum Durchführen von Decodieren von codierten Videoinformationen nach Anspruch 34, **dadurch gekennzeichnet, dass** er ferner umfasst:
- Mittel zum Ermitteln von Differenzbewegungskoeffizienten der Blöcke innerhalb des Makroblocks auf Grundlage der empfangenen codierten Videoinformationen und
- Mittel zum Rekonstruieren von Bewegungskoeffizienten für die Blöcke innerhalb des Makroblocks unter Verwendung der abgeleiteten Vorhersagebewegungskoeffizienten und der Differenzbewegungskoeffizienten.

37. Decodierer zum Durchführen von Decodieren von codierten Videoinformationen nach Anspruch 34, **dadurch gekennzeichnet, dass** der Decodierer ausgelegt ist, mindestens zwei Makroblocksegmentierung-Vorhersageverfahren-Paare in Bezug auf eine verfügbare Makroblocksegmentierung zu definieren.

38. Decodierer zum Durchführen von Decodieren von codierten Videoinformationen nach Anspruch 34, **dadurch gekennzeichnet, dass** der Decodierer ausgelegt ist, nur ein Vorhersageverfahren für jede verfügbare Makroblocksegmentierung zu definieren.

39. Computerprogrammelement zum Durchführen von bewegungskompensiertem Codieren von Videoinformationen, umfassend:
- Mittel zum Empfangen eines Rahmens mit Videoinformationen,
- Mittel (111) zum Segmentieren des Rahmens mit Videoinformationen in Makroblöcke,
- Mittel (112) zum Angeben einer bestimmten Anzahl von verfügbaren Makroblocksegmentierungen (70, 71, 72, 83, 84, 85), die mögliche Wege definieren, auf die ein Makroblock in Blöcke segmentiert werden kann,
- Mittel (122) zum Angeben einer bestimmten endlichen Anzahl von verfügbaren Makroblocksegmentierung-Vorhersageverfahren-Paaren (70A, 70B, 70C, 70D, 71A, 71B, 71C, 71D, 71E, 72A, 72B, 72C, 72D, 83, 84, 85) durch Definieren, für jede verfügbare Makroblocksegmentierung (70, 71, 72, 83, 84, 85), mindestens eines verfügbaren Vorhersageverfahrens als eine vorbestimmte Teilmenge möglicher Vorhersageverfahren (60A, 60B, 60C, 60D) abhängig von einer bestimmten verfügbaren Makroblocksegmentierung (70, 71, 72, 83, 84, 85), wobei jedes verfügbare Vorhersageverfahren (60A, 60B, 60C, 60D) für jeden Block eines Makroblocks definiert:
einen oder mehrere assoziierte Vorhersageblöcke, die zum Erzeugen eines Vorhersagebewegungskoeffizienten für einen jeweiligen Block des Makroblocks verwendet werden, und
ein zugehöriges Verfahren zum Ableiten der Vorhersagebewegungskoefizzienten für den jeweiligen Block des Makroblocks aus den Bewegungskoeffizienten des einen oder der mehreren assoziierten Vorhersageblöcke,
- Mittel (125) zum Auswählen eines Makroblocksegmentierung-Vorhersageverfahren-Paars (70A, 70B, 70C, 70D, 71A, 71B, 71C, 71D, 71E, 72A, 72B, 72C, 72D, 83, 84, 85) aus den verfügbaren Makroblocksegmentierung-Vorhersageverfahren-Paaren (70A, 70B, 70C, 70D, 71A, 71B, 71C, 71D, 71E, 72A, 72B, 72C, 72D, 83, 84, 85), wobei die Auswahl des Makroblocksegmentierung-Vorhersageverfahren-Paars auf einem Minimieren einer Kostenfunktion beruht,
- Mittel zum Segmentieren eines Makroblocks unter Verwendung der Makroblocksegmentierung (70, 71, 72, 83, 84, 85), die durch das ausgewählte Makroblocksegmentierung-Vorhersageverfahren-Paar (70A, 70B, 70C, 70D, 71A, 71B, 71C, 71D, 71E, 72A, 72B, 72C, 72D, 83, 84, 85) angegeben wird, und
- Mittel (125) zum Ableiten von makroblocksegmentierungsspezifischen Vorhersagebewegungskoeffizienten für Blöcke innerhalb des Makroblocks unter Verwendung des Vorhersageverfahrens, das vom ausgewählten Makroblocksegmentierung-Vorhersageverfahren-Paar (70A, 70B, 70C, 70D, 71A, 71B, 71C, 71D, 71E, 72A, 72B, 72C, 72D, 83, 84, 85) angegeben wird.

40. Computerprogrammelement nach Anspruch 39, das auf einem computerlesbaren Medium ausgebildet ist.

41. Computerprogrammelement zum Durchführen von bewegungskompensiertem Decodieren von codierten Videoinformationen, umfassend:
- Eingabemittel zum Empfangen von codierten Videoinformationen,
- Mittel zum Definieren einer bestimmten Anzahl von verfügbaren Makroblocksegmentierungen (70, 71, 72, 83, 84, 85), die mögliche Wege angeben, auf die ein Makroblock in Blöcke segmentiert werden kann,
- Mittel zum Angeben einer bestimmten endlichen Anzahl von verfügbaren Makroblocksegmentierung-Vorhersageverfahren-Paaren (70A, 70B, 70C, 70D, 71A, 71B, 71C, 71D, 71E, 72A, 72B, 72C, 72D, 83, 84, 85) durch Definieren, für jede verfügbare Makroblocksegmentierung (70, 71, 72, 83, 84, 85), mindestens eines verfügbaren Vorhersageverfahrens als eine vorbestimmte Teilmenge möglicher Vorhersageverfahren (60A, 60B, 60C, 60D) abhängig von einer bestimmten verfügbaren Makroblocksegmentierung (70, 71, 72, 83, 84, 85), wobei jedes verfügbare Vorhersageverfahren (60A, 60B, 60C, 60D) für jeden Block eines Makroblocks definiert:
einen oder mehrere assoziierte Vorhersageblöcke, die zum Erzeugen eines Vorhersagebewegungskoeffizienten für einen jeweiligen Block des Makroblocks verwendet werden, und
ein zugehöriges Verfahren zum Ableiten der Vorhersagebewegungskoefizzienten für den jeweiligen Block des Makroblocks aus den Bewegungskoeffizienten des einen oder der mehreren Vorhersageblöcke,
- Eingabemittel zum Empfangen von Informationen, die zumindest die für einen Makroblock ausgewählte Makroblocksegmentierung (70, 71, 72, 83, 84, 85) anzeigen,
- Mittel (132) zum Ermitteln des Vorhersageverfahrens, das mit der Segmentierung des Makroblocks verbunden ist, unter Bezugnahme auf die definierten ausgewählten Makroblocksegmentierung-Vorhersageverfahren-Paare (70A, 70B, 70C, 70D, 71A, 71B, 71C, 71D, 71E, 72A, 72B, 72C, 72D, 83, 84, 85) und
- Mittel (131) zum Ableiten von Vorhersagebewegungskoeffizienten für Blöcke innerhalb des Makroblocks unter Verwendung des ermittelten Vorhersageverfahrens.

42. Computerprogrammelement zum Durchführen von bewegungskompensiertem Decodieren von codierten Videoinformationen nach Anspruch 41, wobei mindestens zwei Makroblocksegmentierung-Vorhersageverfahren-Paare in Bezug auf eine verfügbare Makroblocksegmentierung definiert sind.

43. Computerprogrammelement zum Durchführen von bewegungskompensiertem Decodieren von codierten Videoinformationen nach Anspruch 41, wobei nur ein Vorhersageverfahren für jede verfügbare Makroblocksegmentierung definiert ist.

44. Computerprogrammelement nach Anspruch 41, 42 oder 43, das auf einem computerlesbaren Medium ausgebildet ist.

45. Speichervorrichtung, die einen Codierer nach Anspruch 32 umfasst.

46. Mobile Station, die einen Codierer nach Anspruch 32 umfasst.

47. Mobile Station, die einen Decodierer nach Anspruch 34 umfasst.

48. Netzwerkelement, das einen Codierer nach Anspruch 32 umfasst.

49. Netzwerkelement nach Anspruch 48, wobei das Netzwerkelement ein Netzwerkelement eines mobilen Telekommunikationsnetzwerks ist.

## Revendications

1. Procédé pour coder des informations vidéo comprenant :
- la définition (401) d'un certain nombre de segmentations de macrobloc disponibles (70, 71, 72, 83, 84, 85) qui spécifient des manières possibles de segmenter un macrobloc en bloc,
- la définition d'un certain nombre fini de paires segmentation de macrobloc - procédé de prédiction disponibles (70A, 70B, 70C, 70D, 71A, 71B, 71C, 71D, 71E, 72A, 72B, 72C, 72D, 83, 84, 85) en définissant (402), pour chaque segmentation de macrobloc disponible (70, 71, 72, 83, 84, 85), au moins un procédé de prédiction disponible en tant que sous-ensemble prédéterminé de procédés de prédiction possibles (60A, 60B, 60C, 60D) en fonction d'une segmentation de macrobloc disponible respective (70, 71, 72, 83, 84, 85), dans lequel chaque procédé de prédiction disponible (60A, 60B, 60C, 60D) définit, pour chaque bloc d'un macrobloc,
un ou plusieurs blocs de prédiction associés utilisés dans la production d'un coefficient de mouvement de prédiction pour un bloc respectif du macrobloc, et
un procédé associé pour dériver le coefficient de mouvement de prédiction pour ledit bloc respectif du macrobloc à partir de coefficients de mouvement dudit ou desdits blocs de prédiction associés,
- la segmentation (403) d'une trame d'informations vidéo en macroblocs,
- la sélection (411), pour un macrobloc, d'une des paires segmentation de macrobloc - procédé de prédiction disponibles (70A, 70B, 70C, 70D, 71A, 71B, 71C, 71D, 71E, 72A, 72B, 72C, 72D, 83, 84, 85), dans lequel la sélection de la paire segmentation de macrobloc - procédé de prédiction est basée sur une minimisation d'une fonction de coût et
- la segmentation du macrobloc en blocs et la dérivation de coefficients de mouvement de prédiction pour les blocs à l'intérieur dudit macrobloc à l'aide de la paire segmentation de macrobloc - procédé de prédiction sélectionnée (70A, 70B, 70C, 70D, 71A, 71B, 71C, 71D, 71E, 72A, 72B, 72C, 72D, 83, 84, 85).

2. Procédé pour coder des informations vidéo selon la revendication 1, **caractérisé en ce que** chaque bloc de prédiction dudit ou desdits blocs de prédiction associés est un bloc voisin du bloc respectif dudit macrobloc.

3. Procédé pour coder des informations vidéo selon la revendication 1 ou 2, **caractérisé en ce qu'**au moins l'une des paires segmentation de macrobloc - procédé de prédiction disponibles définit le fait que les coefficients de mouvement de prédiction pour un bloc à l'intérieur dudit macrobloc sont dérivés des coefficients de mouvement de seulement un bloc de prédiction.

4. Procédé pour coder des informations vidéo selon la revendication 1, 2 ou 3, **caractérisé en ce qu'**au moins l'une des paires segmentation de macrobloc - procédé de prédiction disponibles définit le fait que les coefficients de mouvement de prédiction pour un bloc à l'intérieur dudit macrobloc sont dérivés des coefficients de mouvement d'au moins un premier bloc de prédiction et un second bloc de prédiction.

5. Procédé pour coder des informations vidéo selon la revendication 4, **caractérisé en ce que** les coefficients de mouvement de prédiction pour un bloc sont dérivés d'une médiane des coefficients de mouvement d'au moins un premier bloc de prédiction et un second bloc de prédiction.

6. Procédé pour coder des informations vidéo selon la revendication 1, 2, 3 ou 4, **caractérisé en ce qu'**au moins l'une des paires segmentation de macrobloc - procédé de prédiction disponibles spécifie le fait que les coefficients de mouvement de prédiction pour un bloc à l'intérieur dudit macrobloc sont dérivés de coefficients de mouvement de blocs de prédiction à l'intérieur dudit macrobloc.

7. Procédé pour coder des informations vidéo selon la revendication 1, 2, 3, 4 ou 6, **caractérisé en ce qu'**un bloc de prédiction qui doit être utilisé dans la production de coefficients de mouvement de prédiction pour un bloc, est défini comme un bloc comprenant un certain pixel prédéterminé dont l'emplacement est défini par rapport audit bloc.

8. Procédé pour coder des informations vidéo selon la revendication 7, **caractérisé en ce que** l'emplacement d'un pixel prédéterminé pour un premier bloc est différent de l'emplacement d'un pixel prédéterminé pour un second bloc.

9. Procédé pour coder des informations vidéo selon la revendication 1, 2, 3, 4, 6 ou 7, **caractérisé en ce que** le nombre de blocs de prédiction par bloc est au maximum un certain nombre dans l'une quelconque des paires segmentation de macrobloc - procédé de prédiction.

10. Procédé pour coder des informations vidéo selon la revendication 9, **caractérisé en ce que** le nombre de blocs de prédiction par bloc est d'au maximum trois.

11. Procédé pour coder des informations vidéo selon la revendication 10, **caractérisé en ce qu'**un bloc de prédiction qui doit être utilisé dans la production de coefficients de mouvement de prédiction pour un bloc, est défini comme un bloc comprenant un certain pixel prédéterminé dont l'emplacement est défini par rapport audit bloc.

12. Procédé pour coder des informations vidéo selon la revendication 11, **caractérisé en ce qu'**au moins pour certains premiers blocs se rapportant à certaines premières paires segmentation de macrobloc - procédé de prédiction, les pixels prédéterminés comprennent le pixel le plus haut adjacent au bloc depuis la gauche, le pixel le plus à gauche surjacent au bloc et le pixel de coin à coin avec le pixel supérieur droit du bloc.

13. Procédé pour coder des informations vidéo selon la revendication 1, 2, 3, 4, 6, 7 ou 9, **caractérisé en ce que** les macroblocs et les blocs résultant des segmentations de macrobloc sont quadrilatères.

14. Procédé pour coder des informations vidéo selon la revendication 13, **caractérisé en ce que** les macroblocs et les blocs résultant des segmentations de macrobloc sont rectangulaires.

15. Procédé pour coder des informations vidéo selon la revendication 14, **caractérisé en ce que** les segmentations de macrobloc disponibles comprennent une première segmentation de macrobloc ayant pour conséquence un bloc, une deuxième segmentation de macrobloc divisant un macrobloc une fois avec une ligne verticale, une troisième segmentation de macrobloc divisant un macrobloc une fois avec une ligne horizontale, une quatrième segmentation de macrobloc divisant un macrobloc une fois avec une ligne verticale et une fois avec une ligne horizontale, une cinquième segmentation de macrobloc divisant un macrobloc une fois avec une ligne verticale et trois fois avec une ligne horizontale et une sixième segmentation de macrobloc divisant un macrobloc trois fois avec une ligne verticale et une fois avec une ligne horizontale.

16. Procédé pour coder des informations vidéo selon la revendication 14, **caractérisé en ce qu'**un procédé de prédiction est défini pour chaque segmentation de macrobloc disponible, un bloc de prédiction pour un bloc est défini comme un bloc comprenant un certain pixel prédéterminé dont l'emplacement est défini par rapport audit bloc, des coefficients de prédiction pour certains premiers blocs sont dérivés des coefficients de mouvement de seulement un bloc de prédiction spécifique à un bloc et des coefficients de prédiction pour certains seconds blocs sont dérivés des coefficients de mouvement de plus d'un bloc de prédiction spécifique à un bloc.

17. Procédé pour coder des informations vidéo selon la revendication 1, 2, 3, 4, 6, 7, 9 ou 13, **caractérisé en ce que** la segmentation de macrobloc de macroblocs voisins affecte la sélection des paires segmentation de macrobloc - procédé de prédiction disponibles pour un macrobloc.

18. Procédé pour coder des informations vidéo selon la revendication 1, 2, 3, 4, 6, 7, 9, 13 ou 17, **caractérisé en ce qu'**une paire segmentation de macrobloc - procédé de prédiction est définie pour chaque segmentation de macrobloc disponible.

19. Procédé pour coder des informations vidéo selon la revendication 18, **caractérisé en ce qu'**il comprend :
- la transmission d'informations indiquant la segmentation de macrobloc sélectionnée à un décodeur ou le stockage d'informations indiquant la paire segmentation de macrobloc - procédé de prédiction sélectionnée dans un support de stockage.

20. Procédé pour coder des informations vidéo selon la revendication 1, 2, 3, 4, 6, 7, 9, 13, 17 ou 18, **caractérisé en ce qu'**il comprend :
- la transmission d'informations indiquant la paire segmentation de macrobloc - procédé de prédiction sélectionnée à un décodeur ou le stockage d'informations indiquant la paire segmentation de macrobloc - procédé de prédiction sélectionnée dans un support de stockage.

21. Procédé pour coder des informations vidéo selon la revendication 1, 2, 3, 4, 6, 7, 9, 13, 17, 18 ou 20, **caractérisé en ce qu'**il comprend :
- l'estimation du mouvement de blocs à l'intérieur du macrobloc par rapport à une trame vidéo de référence,
- la représentation du mouvement des blocs à l'intérieur du macrobloc avec un modèle comprenant un ensemble de fonctions de base et des coefficients de mouvement, et
- la représentation des coefficients de mouvement ainsi obtenus sous la forme d'une somme des coefficients de mouvement de prédiction et des coefficients de mouvement de différence.

22. Procédé pour coder des informations vidéo selon la revendication 21, **caractérisé en ce que** le modèle utilisé pour représenter le mouvement d'un bloc est un modèle de mouvement translationnel.

23. Procédé pour coder des informations vidéo selon la revendication 21, **caractérisé en ce que** la sélection de la paire segmentation de macrobloc - procédé de prédiction est basée sur une minimisation d'une fonction de coût qui comporte au moins une mesure d'une erreur de reconstruction se rapportant à une paire segmentation de macrobloc - procédé de prédiction et une mesure d'une quantité d'informations nécessaires pour indiquer la paire segmentation de macrobloc - procédé de prédiction et pour représenter les coefficients de mouvement de différence des blocs à l'intérieur dudit macrobloc.

24. Procédé pour coder des informations vidéo selon la revendication 21, **caractérisé en ce qu'**il comprend en outre :
- la transmission d'informations indiquant la paire segmentation de macrobloc - procédé de prédiction sélectionnée à un décodeur ou le stockage d'informations indiquant la paire segmentation de macrobloc - procédé de prédiction sélectionnée dans un support de stockage et
- la transmission d'informations concernant les coefficients de mouvement de différence à un décodeur ou le stockage d'informations concernant les coefficients de mouvement de différence dans un moyen de stockage.

25. Procédé pour coder des informations vidéo selon la revendication 21, **caractérisé en ce qu'**il comprend en outre :
- la reconstruction du mouvement des blocs à l'intérieur du macrobloc à l'aide des coefficients de mouvement, des fonctions de base et des informations concernant la segmentation de macrobloc,
- la détermination d'informations vidéo prédites à l'aide de la trame vidéo de référence et du mouvement reconstruit des blocs,
- la détermination d'informations vidéo d'erreur de prédiction correspondantes sur la base d'une différence entre les informations vidéo prédites et les informations vidéo du macrobloc,
- le codage des informations vidéo d'erreur de prédiction et la représentation de celles-ci avec des coefficients d'erreur de prédiction, et
- la transmission d'informations concernant les coefficients d'erreur de prédiction à un décodeur ou le stockage d'informations concernant les coefficients d'erreur de prédiction dans un moyen de stockage.

26. Procédé pour décoder des informations vidéo codées, **caractérisé en ce qu'**il comprend :
- la définition (501) d'un certain nombre de segmentations de macrobloc disponibles (70, 71, 72, 83, 84, 85) qui spécifient des manières possibles de segmenter un macrobloc en bloc,
- la définition d'un certain nombre fini de paires segmentation de macrobloc - procédé de prédiction disponibles (70A, 70B, 70C, 70D, 71A, 71B, 71C, 71D, 71E, 72A, 72B, 72C, 72D, 83, 84, 85) en définissant (502), pour chaque segmentation de macrobloc disponible (70, 71, 72, 83, 84, 85), au moins un procédé de prédiction disponible en tant que sous-ensemble prédéterminé de procédés de prédiction possibles (60A, 60B, 60C, 60D) en fonction d'une segmentation de macrobloc disponible respective (70, 71, 72, 83, 84, 85), dans lequel chaque procédé de prédiction disponible (60A, 60B, 60C, 60D) définit, pour chaque bloc d'un macrobloc,
un ou plusieurs blocs de prédiction associés utilisés dans la production d'un coefficient de mouvement de prédiction pour un bloc respectif du macrobloc, et
un procédé associé pour dériver le coefficient de mouvement de prédiction pour ledit bloc respectif du macrobloc à partir de coefficients de mouvement dudit ou desdits blocs de prédiction associés,
- la réception (503) d'informations indiquant au moins une segmentation de macrobloc (70, 71, 72, 83, 84, 85) sélectionnée pour un macrobloc dans lesdites informations vidéo codées et
- la détermination (505) d'un procédé de prédiction se rapportant à la segmentation de macrobloc (70, 71, 72, 83, 84, 85) dudit macrobloc en se référant aux paires segmentation de macrobloc - procédé de prédiction définies (70A, 70B, 70C, 70D, 71A, 71B, 71C, 71D, 71E, 72A, 72B, 72C, 72D, 83, 84, 85) et la dérivation de coefficients de mouvement de prédiction pour des blocs à l'intérieur dudit macrobloc à l'aide du procédé de prédiction déterminé.

27. Procédé pour décoder des informations vidéo codées selon la revendication 26, **caractérisé en ce que** ladite réception d'informations indiquant au moins une segmentation de macrobloc comprend la réception d'une indication d'une paire segmentation de macrobloc - procédé de prédiction sélectionnée.

28. Procédé pour décoder des informations vidéo codées selon la revendication 26, **caractérisé en ce qu'**au moins deux paires segmentation de macrobloc - procédé de prédiction se rapportant à une certaine segmentation de macrobloc disponible sont définies.

29. Procédé pour décoder des informations vidéo codées selon la revendication 26, **caractérisé en ce que** seulement un procédé de prédiction est défini pour chaque segmentation de macrobloc disponible.

30. Procédé pour décoder des informations vidéo codées selon la revendication 26, **caractérisé en ce qu'**il comprend :
- la réception d'informations concernant des coefficients de mouvement de différence décrivant un mouvement de blocs à l'intérieur d'un macrobloc et
- la reconstruction de coefficients de mouvement pour les blocs à l'intérieur dudit macrobloc sous la forme d'une somme des coefficients de mouvement de prédiction dérivés et des coefficients de mouvement de différence.

31. Procédé pour décoder des informations vidéo codées selon la revendication 30, **caractérisé en ce qu'**il comprend :
- la réception d'informations concernant des coefficients d'erreur de prédiction décrivant des informations vidéo d'erreur de prédiction et
- la détermination d'une trame décodée d'informations vidéo à l'aide d'au moins les coefficients de mouvement et les informations vidéo d'erreur de prédiction.

32. Codeur pour effectuer un codage compensé en mouvement d'informations vidéo comprenant :
- un moyen pour recevoir une trame d'informations vidéo,
- un moyen (111) pour segmenter la trame d'informations vidéo en macroblocs,
- un moyen (112) pour spécifier un certain nombre de segmentations de macrobloc disponibles (70, 71, 72, 83, 84, 85) qui définissent des manières possibles de segmenter un macrobloc en bloc,
- un moyen (122) pour spécifier un certain nombre fini de paires segmentation de macrobloc - procédé de prédiction disponibles (70A, 70B, 70C, 70D, 71A, 71B, 71C, 71D, 71E, 72A, 72B, 72C, 72D, 83, 84, 85) en définissant au moins un procédé de prédiction disponible pour chaque segmentation de macrobloc disponible (70, 71, 72, 83, 84, 85) en tant que sous-ensemble prédéterminé de procédés de prédiction possibles (60A, 60B, 60C, 60D) en fonction d'une segmentation de macrobloc disponible respective (70, 71, 72, 83, 84, 85), dans lequel chaque procédé de prédiction disponible (60A, 60B, 60C, 60D) définit, pour chaque bloc d'un macrobloc,
un ou plusieurs blocs de prédiction associés utilisés dans la production d'un coefficient de mouvement de prédiction pour un bloc respectif du macrobloc, et
un procédé associé pour dériver le coefficient de mouvement de prédiction pour ledit bloc respectif du macrobloc à partir de coefficients de mouvement dudit ou desdits blocs de prédiction associés,
- un moyen (125) pour sélectionner une paire segmentation de macrobloc - procédé de prédiction (70A, 70B, 70C, 70D, 71A, 71B, 71C, 71D, 71E, 72A, 72B, 72C, 72D, 83, 84, 85) parmi les paires segmentation de macrobloc - procédé de prédiction disponibles (70A, 70B, 70C, 70D, 71A, 71B, 71C, 71D, 71E, 72A, 72B, 72C, 72D, 83, 84, 85), dans lequel la sélection de la paire segmentation de macrobloc - procédé de prédiction est basée sur une minimisation d'une fonction de coût,
- un moyen pour segmenter un macrobloc à l'aide de la segmentation de macrobloc (70, 71, 72, 83, 84, 85) spécifiée par la paire segmentation de macrobloc - procédé de prédiction sélectionnée (70A, 70B, 70C, 70D, 71A, 71B, 71C, 71D, 71E, 72A, 72B, 72C, 72D, 83, 84, 85) et
- un moyen (123) pour dériver des coefficients de mouvement de prédiction spécifiques à une segmentation de macrobloc pour des blocs à l'intérieur dudit macrobloc à l'aide du procédé de prédiction spécifié par la paire segmentation de macrobloc - procédé de prédiction sélectionnée (70A, 70B, 70C, 70D, 71A, 71B, 71C, 71D, 71E, 72A, 72B, 72C, 72D, 83, 84, 85).

33. Codeur pour effectuer un codage compensé en mouvement d'informations vidéo selon la revendication 32, **caractérisé en ce qu'**il comprend en outre :
- un moyen de mémoire pour stocker une trame vidéo de référence,
- un moyen pour estimer un champ de mouvement de blocs dans la trame d'informations vidéo à l'aide d'au moins la trame vidéo de référence,
- un moyen pour produire des coefficients de mouvement décrivant les champs de mouvement estimés, et
- un moyen pour produire des coefficients de mouvement de différence à l'aide des coefficients de mouvement et des coefficients de mouvement de prédiction.

34. Décodeur pour effectuer un décodage compensé en mouvement d'informations vidéo codées comprenant :
- un moyen d'entrée pour recevoir des informations vidéo codées,
- un moyen pour définir un certain nombre de segmentations de macrobloc disponibles (70, 71, 72, 83, 84, 85) qui spécifient des manières possibles de segmenter un macrobloc en bloc,
- un moyen pour spécifier un certain nombre fini de paires segmentation de macrobloc - procédé de prédiction disponibles (70A, 70B, 70C, 70D, 71A, 71B, 71C, 71D, 71E, 72A, 72B, 72C, 72D, 83, 84, 85) en définissant au moins un procédé de prédiction disponible pour chaque segmentation de macrobloc disponible (70, 71, 72, 83, 84, 85) en tant que sous-ensemble prédéterminé de procédés de prédiction possibles (60A, 60B, 60C, 60D) en fonction d'une segmentation de macrobloc disponible respective (70, 71, 72, 83, 84, 85), dans lequel chaque procédé de prédiction disponible (60A, 60B, 60C, 60D) définit, pour chaque bloc d'un macrobloc,
un ou plusieurs blocs de prédiction associés utilisés dans la production d'un coefficient de mouvement de prédiction pour un bloc respectif du macrobloc, et
un procédé associé pour dériver le coefficient de mouvement de prédiction pour ledit bloc respectif du macrobloc à partir de coefficients de mouvement dudit ou desdits blocs de prédiction associés,
- un moyen d'entrée pour recevoir des informations indiquant au moins la segmentation de macrobloc (70, 71, 72, 83, 84, 85) sélectionnée pour un macrobloc,
- un moyen (132) pour déterminer le procédé de prédiction se rapportant à la segmentation du macrobloc en se référant aux paires segmentation de macrobloc - procédé de prédiction définies (70A, 70B, 70C, 70D, 71A, 71B, 71C, 71D, 71E, 72A, 72B, 72C, 72D, 83, 84, 85) et
- un moyen (131) pour dériver des coefficients de mouvement de prédiction pour des blocs à l'intérieur dudit macrobloc à l'aide du procédé de prédiction déterminé.

35. Décodeur pour effectuer un décodage d'informations vidéo codées selon la revendication 34, **caractérisé en ce que** le décodeur est configuré pour recevoir une indication d'une paire segmentation de macrobloc - procédé de prédiction sélectionnée.

36. Décodeur pour effectuer un décodage d'informations vidéo codées selon la revendication 34, **caractérisé en ce qu'**il comprend en outre :
- un moyen pour déterminer des coefficients de mouvement de différence des blocs à l'intérieur dudit macrobloc sur la base des informations vidéo codées reçues et
- un moyen pour reconstruire des coefficients de mouvement pour les blocs à l'intérieur dudit macrobloc à l'aide des coefficients de mouvement de prédiction dérivés et des coefficients de mouvement de différence.

37. Décodeur pour effectuer un décodage d'informations vidéo codées selon la revendication 34, **caractérisé en ce que** le décodeur est configuré pour définir au moins deux paires segmentation de macrobloc - procédé de prédiction se rapportant à une certaine segmentation de macrobloc disponible.

38. Décodeur pour effectuer un décodage d'informations vidéo codées selon la revendication 34, **caractérisé en ce que** le décodeur est configuré pour définir seulement un procédé de prédiction pour chaque segmentation de macrobloc disponible.

39. Élément de programme d'ordinateur pour effectuer un codage compensé en mouvement d'informations vidéo comprenant :
- un moyen pour recevoir une trame d'informations vidéo,
- un moyen (111) pour segmenter la trame d'informations vidéo en macroblocs,
- un moyen (112) pour spécifier un certain nombre de segmentations de macrobloc disponibles (70, 71, 72, 83, 84, 85) qui définissent des manières possibles de segmenter un macrobloc en bloc,
- un moyen (122) pour spécifier un certain nombre fini de paires segmentation de macrobloc - procédé de prédiction disponibles (70A, 70B, 70C, 70D, 71A, 71B, 71C, 71D, 71E, 72A, 72B, 72C, 72D, 83, 84, 85) en définissant au moins un procédé de prédiction disponible pour chaque segmentation de macrobloc disponible (70, 71, 72, 83, 84, 85) en tant que sous-ensemble prédéterminé de procédés de prédiction possibles (60A, 60B, 60C, 60D) en fonction d'une segmentation de macrobloc disponible donnée (70, 71, 72, 83, 84, 85), dans lequel chaque procédé de prédiction disponible (60A, 60B, 60C, 60D) définit, pour chaque bloc d'un macrobloc,
un ou plusieurs blocs de prédiction associés utilisés dans la production d'un coefficient de mouvement de prédiction pour un bloc respectif du macrobloc, et
un procédé associé pour dériver le coefficient de mouvement de prédiction pour ledit bloc respectif du macrobloc à partir des coefficients de mouvement dudit ou desdits blocs de prédiction associés,
- un moyen (125) pour sélectionner une paire segmentation de macrobloc - procédé de prédiction (70A, 70B, 70C, 70D, 71A, 71B, 71C, 71D, 71E, 72A, 72B, 72C, 72D, 83, 84, 85) parmi les paires segmentation de macrobloc - procédé de prédiction disponibles (70A, 70B, 70C, 70D, 71A, 71B, 71C, 71D, 71E, 72A, 72B, 72C, 72D, 83, 84, 85), dans lequel la sélection de la paire segmentation de macrobloc - procédé de prédiction est basée sur une minimisation d'une fonction de coût,
- un moyen pour segmenter un macrobloc à l'aide de la segmentation de macrobloc (70, 71, 72, 83, 84, 85) spécifiée par la paire segmentation de macrobloc - procédé de prédiction sélectionnée (70A, 70B, 70C, 70D, 71A, 71B, 71C, 71D, 71E, 72A, 72B, 72C, 72D, 83, 84, 85) et
- un moyen (125) pour dériver des coefficients de mouvement de prédiction spécifiques à une segmentation de macrobloc pour des blocs à l'intérieur dudit macrobloc à l'aide du procédé de prédiction spécifié par la paire segmentation de macrobloc - procédé de prédiction sélectionnée (70A, 70B, 70C, 70D, 71A, 71B, 71C, 71D, 71E, 72A, 72B, 72C, 72D, 83, 84, 85).

40. Élément de programme d'ordinateur tel que spécifié dans la revendication 39, intégré sur un support lisible par ordinateur.

41. Élément de programme d'ordinateur pour effectuer un décodage compensé en mouvement d'informations vidéo codées comprenant :
- un moyen d'entrée pour recevoir des informations vidéo codées,
- un moyen pour définir un certain nombre de segmentations de macrobloc disponibles (70, 71, 72, 83, 84, 85) qui spécifient des manières possibles de segmenter un macrobloc en bloc,
- un moyen pour spécifier un certain nombre fini de paires segmentation de macrobloc - procédé de prédiction disponibles (70A, 70B, 70C, 70D, 71A, 71B, 71C, 71D, 71E, 72A, 72B, 72C, 72D, 83, 84, 85) en définissant au moins un procédé de prédiction disponible pour chaque segmentation de macrobloc disponible (70, 71, 72, 83, 84, 85) en tant que sous-ensemble prédéterminé de procédés de prédiction possibles (60A, 60B, 60C, 60D) en fonction d'une segmentation de macrobloc disponible donnée (70, 71, 72, 83, 84, 85), dans lequel chaque procédé de prédiction disponible (60A, 60B, 60C, 60D) définit, pour chaque bloc d'un macrobloc,
un ou plusieurs blocs de prédiction associés utilisés dans la production d'un coefficient de mouvement de prédiction pour un bloc respectif du macrobloc, et
un procédé associé pour dériver le coefficient de mouvement de prédiction pour ledit bloc respectif du macrobloc à partir des coefficients de mouvement dudit ou desdits blocs de prédiction,
- un moyen d'entrée pour recevoir des informations indiquant au moins la segmentation de macrobloc (70, 71, 72, 83, 84, 85) sélectionnée pour un macrobloc,
- un moyen (132) pour déterminer le procédé de prédiction se rapportant à la segmentation du macrobloc en se référant aux paires segmentation de macrobloc - procédé de prédiction définies (70A, 70B, 70C, 70D, 71A, 71B, 71C, 71D, 71E, 72A, 72B, 72C, 72D, 83, 84, 85) et
- un moyen (131) pour dériver des coefficients de mouvement de prédiction pour des blocs à l'intérieur dudit macrobloc à l'aide du procédé de prédiction déterminé.

42. Élément de programme d'ordinateur pour effectuer un décodage compensé en mouvement d'informations vidéo codées selon la revendication 41, dans lequel au moins deux paires segmentation de macrobloc - procédé de prédiction se rapportant à une certaine segmentation de macrobloc disponible sont définies.

43. Élément de programme d'ordinateur pour effectuer un décodage compensé en mouvement d'informations vidéo codées selon la revendication 41, dans lequel seulement un procédé de prédiction pour chaque segmentation de macrobloc disponible est défini.

44. Élément de programme d'ordinateur tel que spécifié dans la revendication 41, 42 ou 43, intégré sur un support lisible par ordinateur.

45. Dispositif de stockage comprenant un codeur selon la revendication 32.

46. Station mobile comprenant un codeur selon la revendication 32.

47. Station mobile comprenant un décodeur selon la revendication 34.

48. Élément de réseau comprenant un codeur selon la revendication 32.

49. Élément de réseau selon la revendication 48, l'élément de réseau étant un élément de réseau d'un réseau de télécommunication mobile.
